# EUROPEAN PATENT APPLICATION

(11) **EP 1 873 650 A1**
(43) Date of publication of application: **02.01.2008**
(21) Application number: 05734643.9
(22) Date of filing: 21.04.2005
(51) Int. Cl.: G06F 12/14

(54) **COMPUTER, METHOD FOR CONTROLLING ACCESS TO COMPUTE RESOURCE, AND ACCESS CONTROL PROGRAM**

(71) Applicant: MITSUBISHI ELECTRIC CORPORATION, Chiyoda-ku Tokyo 100-8310 (JP)
(72) Inventor: MATSUDA, Nori,Mitsubishi Elect. Corp., Tokyo 100-8310 (JP); YONEDA, Takeshi,Mitsubishi Elect. Corp., Tokyo 100-8310 (JP); KOYASU, Takehiko,Mitsubishi Elect. Corp., Tokyo 100-8310 (JP); KOHNO, Atsushi,Mitsubishi Elect. Corp., Tokyo 100-8310 (JP)
(74) Representative: Pfenning, Meinig & Partner GbR
(86) International application number: PCT/JP2005/007622
(87) International publication number: WO 2006/114878

(57) **Abstract**

Valid state judging means judging a valid state of an access permission based on state of an execution environment; an access permission management table specifying an access permission to computer resource based on the valid state by the valid state judging means; and an access control execution environment conducting access control based on the access permission management table are provided.

Further, external access control means having the valid state judging means and verifying the access permission including the valid state; and external access control means registration means registering the external access control means so as to be internally called when the access control execution environment authorizes the access permission using the access permission management table are provided.

## Description

### Technical Field

The present invention relates to a computer having a function for controlling access to computer resource, a method for controlling access to computer resource, and an access control program to have a computer execute.

### Background Art

According to a conventional method for controlling access, a granted access permission is defined previously in an access permission management table (ACL: Access Control List) with conditions of information such as a user ID/a group ID/a role/a name of resource/the operation, etc (for example, Non-Patent Document 1: David F. Ferraiolo, D. Richard Kuhn, Ramaswany Chandrasouli, "Role-Based Access Control" ARTECH HOUSE, INC., 2003, pages 6-16).

Then, when the application tries to access the resource, API called for the resource access judges if the application has a use access permission necessary for executing API or not using an access permission authorization mechanism. The access permission authorization mechanism, concretely, obtains attribute information such as a user ID/a group ID/a role, etc. of a starter person and operation attribute information such as a name of resource of a target operation, the operation, etc. as attribute information of the application which calls API.

Only when it is found that the access permission is granted as a result of the access permission authorization, API called for the resource access carries out access to the computer resource. By this, the access permission is authorized when the application performs the operation, and the access to the resource can be controlled.

Further, another method has been proposed in which the application supports the OS to call API, and by carrying out unique access permission authorization at the time of supporting, the access permission which is not supported by the OS is authorized (Patent Document 1: JP 2003-44297. pages 12-21, Fig. 2, for example).

In this method, a unique granted access permission, which is not supported by the OS, is defined in an access permission management table beforehand. Then, when the application tries to access the resource, the API call is supported, and the access permission authorization is carried out using an access permission authorization mechanism (an access control CTRL in the figure) which has been prepared uniquely. This access permission authorization is done similarly to the conventional technique described in Non-Patent Document 1. As a result of the access permission authorization, if it is judged the access permission is granted, the API call, which is essentially to be called, is performed to access the resource.

By the above, a unique access permission, which is not provided by the OS, is granted to an access to various resource (API call), and unique access control can be conducted.

Further, another method is disclosed, in which permission/denial of access is judged by parameters other than attribute of an accessing person such as a user ID/a group ID/a role, etc., a name of resource of a target operation, the operation to be executed (for example, Non-Patent Document 2: ACM Transactions on Information and System Security, Vol. 7, No. 3, August 2004, Pages 392-427 "An Integrated Approach to Engineer and Enforce Context Constraints in RBAC Environments").

This method proposes to provide parameters (Context Condition in Non-Patent Document 2) other than attribute of an accessing person such as a user ID/a group ID/a role, etc., a name of resource of a target operation, the operation to be executed (Permission in Non-Patent Document 2) as parameters to judge permission/denial of access, which conducts more general-purpose access control.

Non-Patent Document 1: David F. Ferraiolo, D. Richard Kuhn, Ramaswamy Chandramouli, "Role-Based Access Control," ARTECH HOUSE, INC., 2003
Non-Patent Document 2: ACM Transaction on Information and System Security, Vol. 7, No. 3, August 2004, Pages 392-427 "An Integrated Approach to Engineer and Enforce Context Constraints in RBAC Environments"
Patent Document 1:JP 2003-44297

### Disclosure of the Invention

### Problems to be Solved by the Invention

The conventional access control methods disclosed in Non-Patent Document 1 and Patent Document 1 have a problem in that the permission/denial of access is judged by only the attribute of an accessing person such as a user ID/a group ID/a role, etc., a name of resource of a target operation, the operation to be executed, so that a state of the program execution environment of the PC, etc. in which the resource is placed is not considered.

For example, by a car navigation system equipped with Java (registered trademark), a driver can freely download and execute Java (registered trademark) programs. Further, a system has been investigated, in which an operation of a vehicle such as releasing a door lock is carried out from a program. However, in a view point of safe driving, the release of door lock is permitted while the vehicle stops, and on the contrary, there is sometimes a case in which the door lock must not be released while the vehicle is moving. Further, similarly, while the vehicle stops, many games accompanying screen drawing are permitted to be played, and on the contrary, while the vehicle is moving, there may be a case in which games cannot be permitted to be played.

Moreover, even if the vehicle is stopping, a case can be considered in which another new operation cannot be accepted in order to perform the essential operation of the car navigation.

For such requirements, the conventional access control method, in which permission/denial of the access is judged only by the attribute of an accessing person, a name of resource of a target operation, the operation to be executed, has a problem that sufficient access control cannot be done, since the state of the program execution environment of the PC, etc. in which the resource is placed is not considered.

In order to solve these problems, the access control method as Non-Patent Document 2 is provided. However, since the access control method disclosed in Non-Patent Document 2 defines, in a unique configuration, parameters other than the attribute of an accessing person, a name of resource, and the operation, when it is applied to, for example, a car navigation system equipped with a Java (registered trademark), it is necessary to modify the program of the main body of Java (registered trademark) so as to become the configuration of Non-Patent Document 2. This kind of modifying operation is extremely difficult, and even if it is possible to modify, it requires lots of labor and costs.

The present invention is provided to solve the above problems and to accomplish access control, with considering the state of the PC in which the program is executed and the state of devices connected thereto, without modifying the programs of the main body of Java (registered trademark), etc., with easy maintenance and good cost performance.

### Means to Solve the Problems

The computer according to the invention includes valid state judging means for judging a valid state of an access permission based on a state of an execution environment, an access permission management table for specifying an access permission to a computer resource based on the valid state by the valid state judging means, and an access control execution environment conducting access control based on the access permission management table.

### Effect of the Invention

By providing valid state judging means judging a valid state of an access permission based on state of an execution environment; an access permission management table specifying an access permission to computer resource based on the valid state by the valid state judging means; and an access control execution environment conducting access control based on the access permission management table, it is possible to perform detailed access control with easy maintenance and good cost performance.

### Brief Explanation of the Drawings

[Fig. 1] is an explanatory diagram showing a configuration of a whole system to which an access control method of the present invention is applied.
[Fig. 2] is an explanatory diagram showing an operation flow of monitoring/control.
[Fig. 3] is an explanatory diagram showing an operation flow in which a monitoring server 105 monitors a vehicle system 101.
[Fig. 4] is an explanatory diagram showing an operation flow in which a door lock is released using a keyless entry 103.
[Fig. 5] is an explanatory diagram showing a configuration of Java (registered trademark) Runtime Environment to which an access control method of the present invention mounted on an in-vehicle PC 111 is applied.
[Fig. 6] is an explanatory diagram showing a configuration of an access permission management table 506.
[Fig. 7] is an explanatory diagram showing a configuration of a security property file 505.
[Fig. 8] is a sequence diagram showing an operation flow of initialization of a Java (registered trademark) Runtime Environment 502 and a reading operation of an access permission management table 506.
[Fig. 9] shows a sequence diagram showing an operation flow of determining a set of granted access permissions to an application when a class that forms an application 501 is read.
[Fig. 10] is an explanatory diagram showing how an access control controller provided by Java (registered trademark) 504 is called when the application 501 calls various API provided by Java (registered trademark) 503 or various in-vehicle API 507.
[Fig. 11] is an operation flow showing a detail of S1004 of Fig. 10, in which access permission authorization is executed.
[Fig. 12] is an operation flow showing a detail of S1105 of Fig. 11, in which access permission authorization is executed using an access permission stored in an access permission list maintaining means [C].
[Fig. 13] is an explanatory diagram showing another configuration of Java (registered trademark) Runtime Environment to which the access control method of the present invention mounted on the in-vehicle PC 111 is applied.

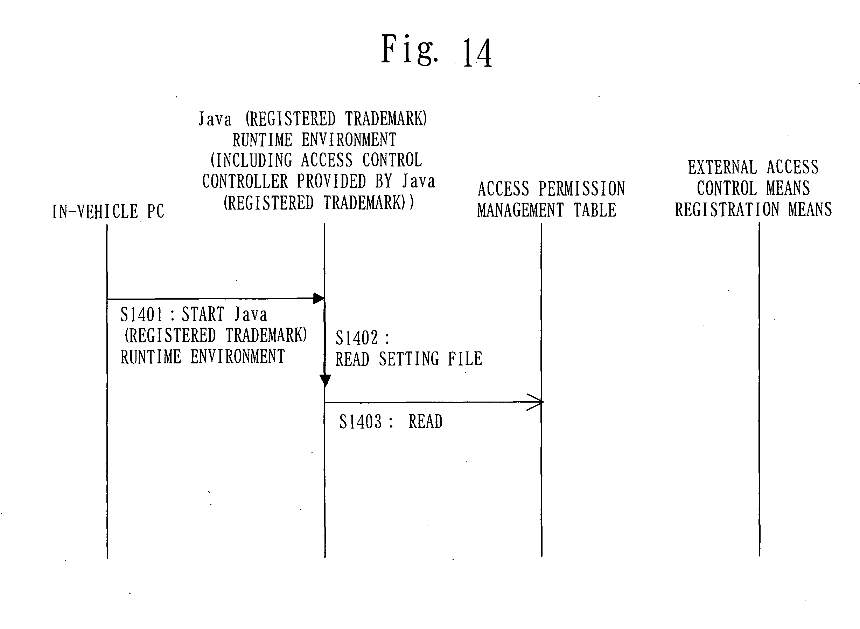

[Fig. 14] is a sequence diagram showing an operation flow of initialization of the Java (registered trademark) Runtime Environment 502 and a reading operation of the access permission management table 506 in case of Fig. 13.

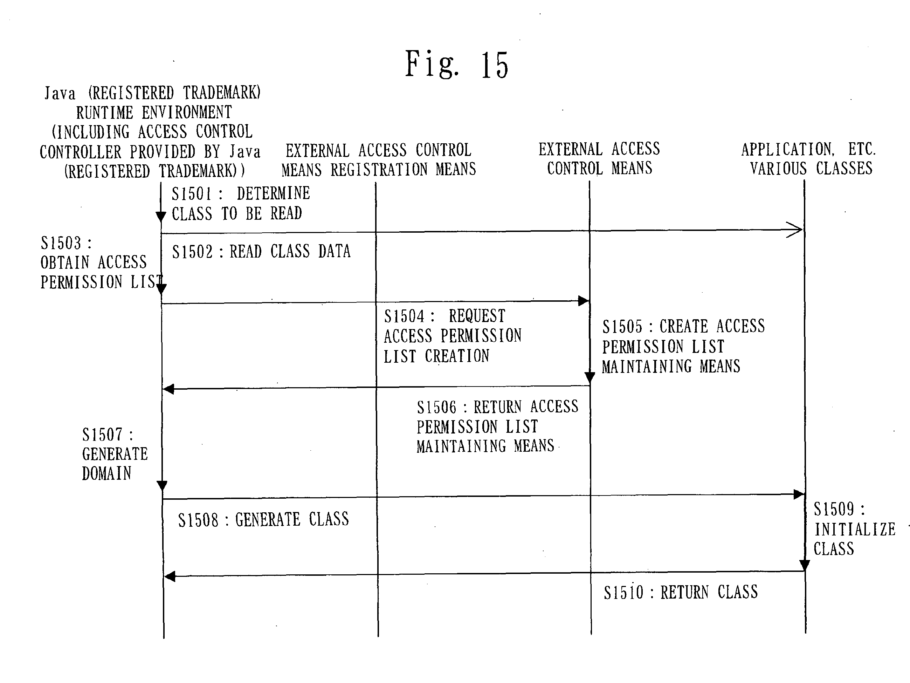

[Fig. 15] shows a sequence diagram showing an operation flow of determining a set of granted access permissions to an application when a class that forms the application 501 is read in case of Fig. 13.
[Fig. 16] is a sequence diagram showing another operation flow of the initialization of the Java (registered trademark) Runtime Environment 502 and a reading operation of the access permission management table 506
[Fig. 17] shows a sequence diagram showing another operation flow of determining a set of granted access permissions to an application when a class that forms the application 501 is read.
[Fig. 18] is an explanatory diagram showing a function configuration of the Java (registered trademark) Runtime Environment 502 according to the second embodiment.
[Fig. 19] is an explanatory drawing showing a configuration of a state verification means management table 1604.
[Fig. 20] shows an operation flow of an external access control means 508 which is called by the access control controller provided by Java (registered trademark) 504.
[Fig. 21] shows an operation flow to read a set of a state verification means 1605 to verify if a valid state 605 is satisfied or not based on the valid state 605 by which the granted access permission is made valid.
[Fig. 22] shows an operation flow to verify if the granted access permission is in a valid state or not in the in-vehicle PC 111 and the vehicle system 101 using the set of a state verification means 1605.
[Fig. 23] shows an operation flow carried out when a state confirmation method is called in the state verification means 1605.
[Fig. 24] is an explanatory drawing showing a configuration of the Java (registered trademark) Runtime Environment 502 according to the third embodiment.
[Fig. 25] is an explanatory drawing showing a configuration of an access permission using state management table 2202.
[Fig. 26] shows an operation flow of the access control controller provided by Java (registered trademark) 504.
[Fig. 27] shows an operation flow to verify a number of uses or an interval of uses of the granted access permission in the state verification means 1605 which verifies if it is in a valid state or not.
[Fig. 28] shows an operation flow to obtain a last time used 2303 or a number of uses 2304 of the granted access permission in an access permission using state managing means 2201.
[Fig. 29] shows an operation flow to store a history of using a certain granted access permission if the granted access permission is judged to be valid.

### Explanation of Signs

101: a vehicle system
102: a mobile phone C
103: a keyless entry
104: a distribution server
105: a monitoring server
106: a mobile phone B
107: the Internet
111: an in-vehicle PC
112: a memory device
113: a display
114: an input device
115: a mobile phone A
116: a wireless device
117: an information system LAN
118: an engine
119: a door lock
120: an immobilizer
121: a velocity meter
122: a headlight
123: a control system LAN
124: an in-vehicle GW
501: an application
502: a Java (registered trademark) Runtime Environment
503: various API provided by Java (registered trademark)
504: an access control controller provided by Java (registered trademark)
505: a security property file
506: an access permission management table
507: various in-vehicle API
508: external access control means
509: access permission judging means
510: valid state judging means
511: access permission list maintaining means
512: external access control means registration means
513: various vehicle system resources
601: a target for granting a permission
602: granted access permission information
603: resource specifying information
604: operation specifying information
605: a valid state
701: an encryption provider set value
702: a policy provider set value
1801: state verification means calling means
1802: state verification means managing means
1803: state verification means reading means
1804: a state verification means management table
1805: state verification means
1901: a name of valid state
1902: a name of state verification means
1903: a parameter
2401: access permission using state managing means
2402: a permission using state management table
2501: code source
2502: access permission information
2503: a last time used
2504: a number of uses

### Preferred Embodiments for Carrying out the Invention

### Embodiment 1.

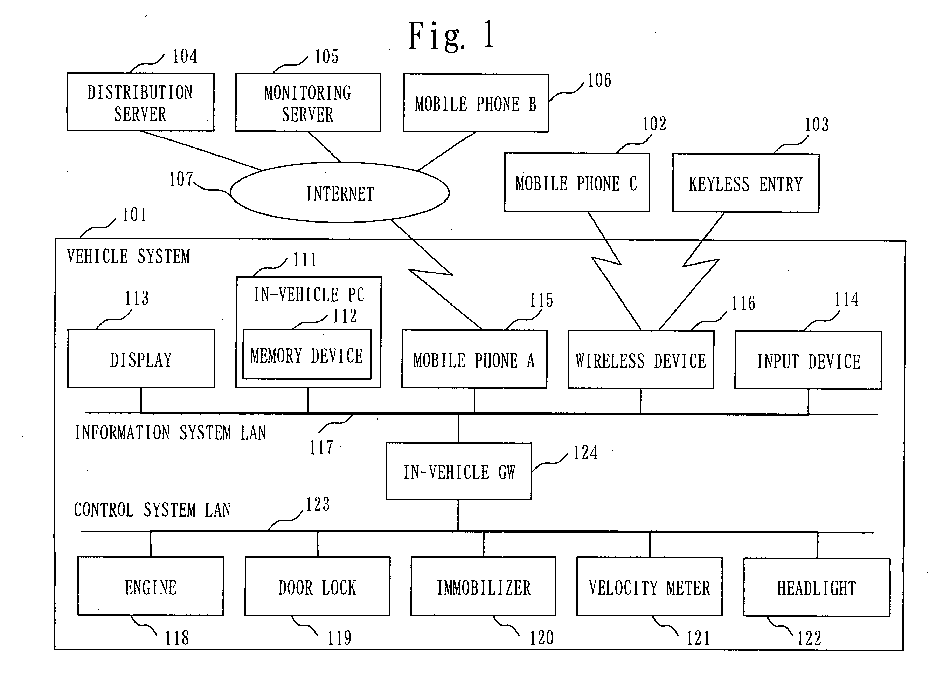

Fig. 1 shows a system configuration when a monitoring/control system is configured by mounting a Java (registered trademark) Runtime Environment (corresponding to an access control execution environment) to which an access control method of the present invention is applied on an in-vehicle PC in order to carry out monitoring/control of a vehicle.

In Fig. 1, a vehicle system 101 is a car, which is configured by various in-vehicle devices such as an in-vehicle PC 111, an engine 118, a velocity meter 121, etc.

The in-vehicle PC 111 is an in-vehicle device mounted on the vehicle system 101, which is provided with an access control function of the invention and a Java (registered trademark) Runtime Environment including API (Application Programming Interface) for controlling various in-vehicle devices mounted on the vehicle system 101. Further, a memory device 112 is provided for storing various Java (registered trademark) programs and an access permission management table.

A display 113 is an in-vehicle device mounted on the vehicle system 101, which is a display device for displaying road information and monitoring information of various in-vehicle devices to a driver and a fellow passenger (collectively called as a driver, hereinafter) in response to a request from an in-vehicle device such as the in-vehicle PC 111.

An input device 114 is a device to input an instruction of a control command, etc. from the driver such as a keyboard, an operation panel, etc. Physically, it is sometimes integrated with a display to form into a touch panel display.

A mobile phone A 115 is an in-vehicle device mounted on or connected to the vehicle system 101, which is a wireless communication device for connecting information system LAN (Local Area Network) 117 connected to the in-vehicle PC 111 with the Internet.

A wireless device 116 is an in-vehicle device mounted on the vehicle system 101, which is a communication device for performing wireless communication in a narrow area such as Bluetooth (registered trademark), IrDA (InfraRed Data Association), a wireless LAN, etc.

An information system LAN 117 is a network for connecting various in-vehicle devices which do not directly affect running of the vehicle as discussed above.

An engine 118 is an in-vehicle device mounted on the vehicle system 101, which is a device for generating energy to move the vehicle.

A door lock 119 is an in-vehicle device mounted on the vehicle system 101, which is a device for controlling lockup/release of a door key of the vehicle.

An immobilizer 120 is an in-vehicle device mounted on the vehicle system 101, which is a device for authenticating a key such as a keyless entry 103, etc. held by a driver using some means and starting the engine 118.

A velocity meter 121 is an in-vehicle device mounted on the vehicle system 101, which is a device for measuring a number of rotations of the engine 118 and a running velocity of the vehicle.

A headlight 122 is an in-vehicle device mounted on the vehicle system 101, which is a device for lighting the front of the vehicle at night or during running in a tunnel.

A control system LAN 123 is a network for connecting various in-vehicle devices that are essential to running of the vehicle such as discussed above.

An in-vehicle GW 124 is an in-vehicle device mounted on the vehicle system 101, which is a device for playing a role of a GW (gateway) to connect the information system LAN 117 and the control system LAN 123 and for converting communication protocol, etc.

A mobile phone C 102 is a device maintained by the driver, which includes a function to communicate with the in-vehicle PC 111 via the wireless device 116 mounted on the vehicle system 101 and a function to send/receive monitoring/control command.

A keyless entry 103 is a device corresponding to a key maintained by the driver, which is a device including a function to communicate with the in-vehicle PC 111 via the wireless device 116 of the vehicle system 101 and a function to send a command for opening/closing the door.

A distribution server 104 is a device connected to the Internet 107, which is a server for distributing Java (registered trademark) program operable on the in-vehicle PC 111 and various contents such as video or music.

A monitoring server 105 is a device connected to the Internet 107, which is a server for carrying out remote monitoring/control of various devices on the vehicle system 101 as well as providing Java (registered trademark) program operable on the in-vehicle PC 111.

A mobile phone B 106 is a device connected to the Internet 107, which is a device for carrying out remote monitoring/control of the vehicle. It is usually maintained by an owner of the vehicle.

The Internet 107 is a general-purpose network for connecting the vehicle system 101, various servers, and the mobile phone B 106 which have been discussed above.

Here, various in-vehicle devices connected to the information system LAN 117 or the control system LAN 123 are not limited to the above-discussed devices, but a wide variety of in-vehicle devices can be connected according to structural elements of the vehicle. Further, a network configuration of the vehicle system 101 is not limited to the above configuration, but a single network and divided network can also be formed.

Further, a server provided on the Internet 107 is not limited to the distribution server 104, the monitoring server 105, or the mobile phone B 106, but various server or client can be provided according to services supplied to the vehicle. Similarly, the mobile phone C 102 and the keyless entry 103 have been shown as devices for connecting to the wireless device, but various devices can be connected according to services to be supplied.

Next, typical using form will be explained as a using form of the monitoring/control system of the vehicle.

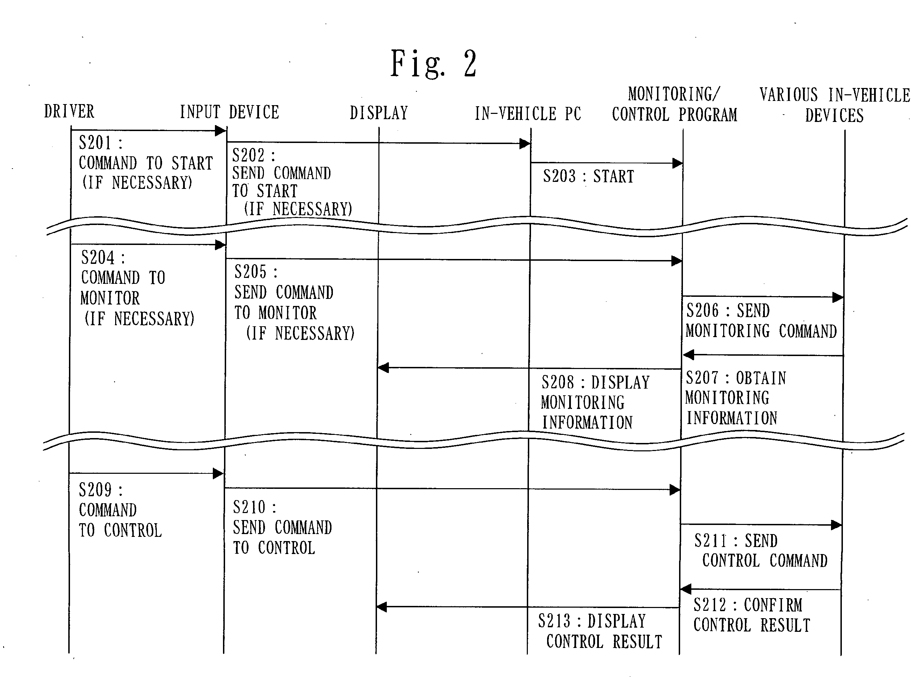

The first using form is monitoring/control by a monitoring/control program operable on the in-vehicle PC. Fig. 2 is an explanatory diagram showing an operation flow of the monitoring/control. The operation flow will be explained in the following by referring to Fig. 2.

At the time of starting the in-vehicle PC 111 or in response to an instruction of the driver, the monitoring/control program for implementing monitoring/control is started on the in-vehicle PC 111 (steps S201 through S203). The monitoring/control program which is started here is sometimes mounted on a memory device 112 of the in-vehicle PC 111 previously or is sometimes a program received by a distribution server 104 or a monitoring server 105 via the Internet 107.

When the monitoring/control program is started, the program sends a monitoring command to obtain monitoring information to various in-vehicle devices automatically or by an instruction of the driver (steps S204 through S206). As a result, the monitoring information is obtained by the in-vehicle devices (step S207) and commands a display to display (step S 208). Then, by repeating this operation, the driver can monitor various in-vehicle devices.

Furthermore, it is assumed that the driver instructs to control the in-vehicle devices by operating an input device 114 (step S209). The monitoring/control program which receives the instruction of the driver (step S210) creates a control command based on the instruction of the driver, sends the control command to the in-vehicle devices to be controlled (step S211), and confirms that the control has been completed (step S212). Then, the control result is displayed on the display (step S213). By this, the driver can control various in-vehicle devices.

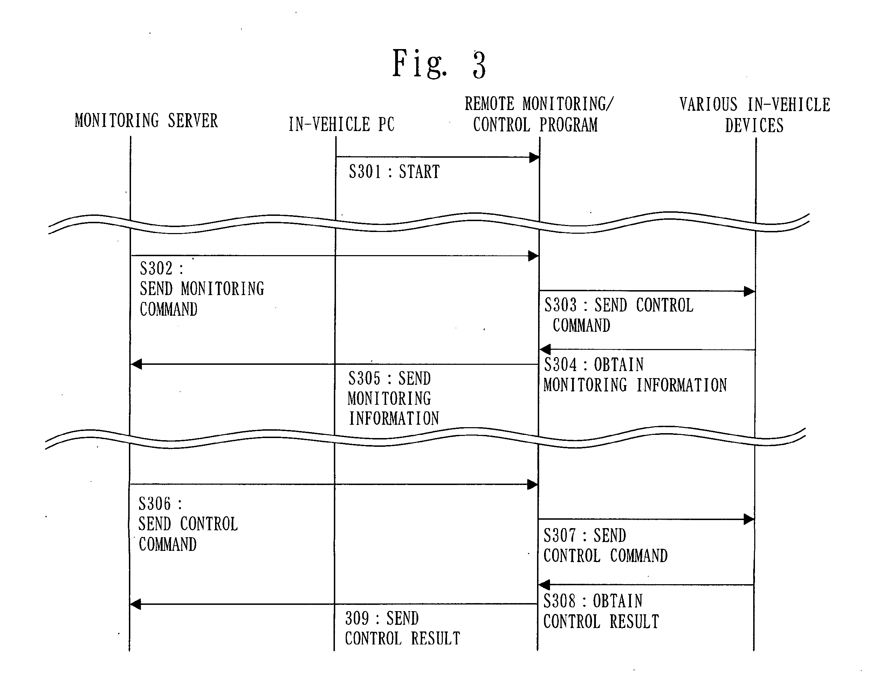

Another using form is remote monitoring/control by the monitoring server 105 or the mobile phone B 106. Fig. 3 is an explanatory drawing showing an operation flow in which the monitoring server 105 monitors the vehicle system 101. The operation flow will be explained using Fig. 3 in the following.

At the time of starting the in-vehicle PC 111 or in response to the instruction of the driver, a remote monitoring/control program which accepts a remote operation is started on the in-vehicle PC 111 (step S301). The remote monitoring/control program which starts here is sometimes mounted on the memory device 112 of the in-vehicle PC 111 previously or is sometimes a program obtained from the monitoring server 105 via the Internet 107. Further, a timing of starting can be at the time of receiving the monitoring command from the monitoring server 105.

When the monitoring server 105 sends the monitoring command to the in-vehicle PC 111 via the Internet 107 and the mobile phone A 115 (step S302), the remote monitoring/control program interprets the monitoring command of the monitoring server 105, sends the control command to the in-vehicle devices (step S303), obtains information of the in-vehicle devices (step S304), and sends the information to the monitoring server (step S305). By this, the monitoring server 105 can implement the remote monitoring of the in-vehicle PC 111.

When the monitoring server 105 further implements control, a control command is sent to the in-vehicle PC 111 (step S306). The remote monitoring/control program which receives the control command interprets the control command of the monitoring server 105, converts to a control command to be sent to the in-vehicle devices, sends the control command to the in-vehicle devices (step S307), and confirms that the control has been completed (step S308). A result derived from sending the control command to the in-vehicle devices is sent to the monitoring server separately (step S309). By this, the monitoring server 105 can implement the remote control of the vehicle system 101.

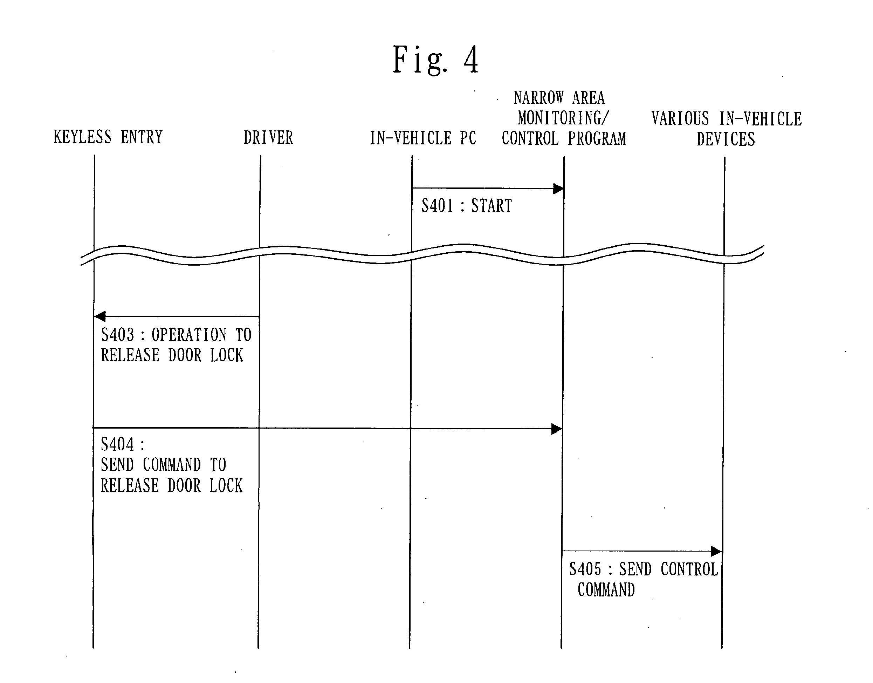

Another using form is a narrow area monitoring/control using a mobile phone C 102 or a keyless entry 103. Fig. 4 is an explanatory drawing showing an operation flow in which a door lock is released using the keyless entry 103. An operation flow will be explained by referring to Fig. 4.

At the time of starting the in-vehicle PC 111 or in response to an instruction of the driver, a narrow area monitoring/control program for receiving a narrow area operation is started on the in-vehicle PC 111 (step S40 1). The narrow area monitoring/control program which is started here is sometimes mounted on the memory device 112 of the in-vehicle PC 111 previously or is sometimes a program obtained by the monitoring server 105 or the distribution server 104 via the Internet 107. Further, a timing of starting can be at the time of receiving the control command from the keyless entry 103.

When the door lock release command is sent to the in-vehicle PC 111 via the wireless device 116 by operating the keyless entry 103 with the driver (step S403) or by automatically with approaching to the vehicle (step S404), the narrow area monitoring/control program interprets the door lock release command, converts to a control command to be sent to the door lock 119 which is one of the in-vehicle devices, and sends the control command to the door lock 119 (step S405). The door lock 119 interprets the control command and releases the lockup of a roor. By this, the driver can release the lockup of the door.

In the above, it has been explained how the remote monitoring/control is used in the vehicle system 101 which mounts the in-vehicle PC 111.

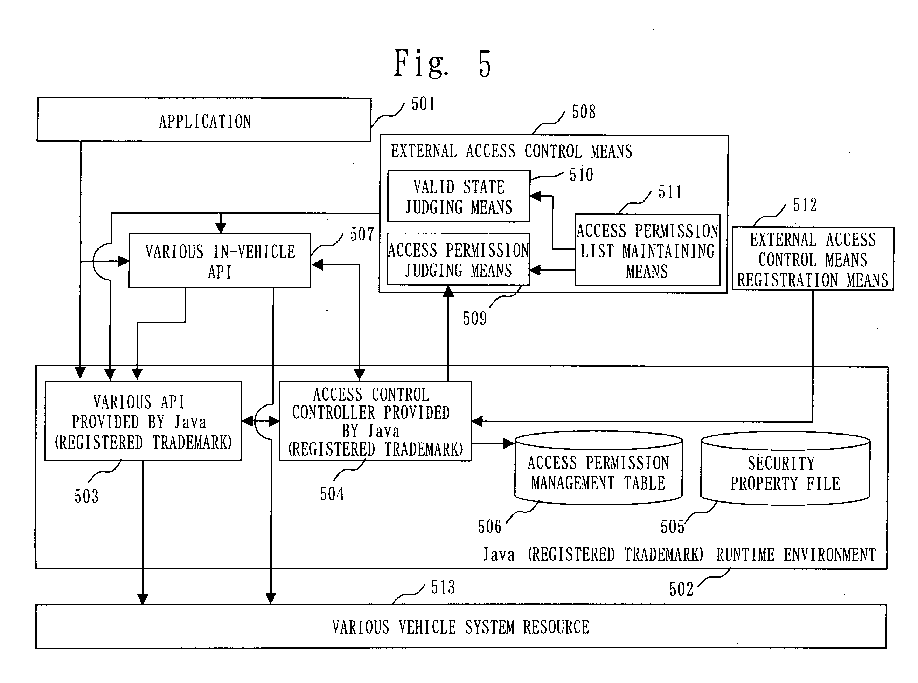

Next, Fig. 5 is an explanatory drawing showing a function configuration which is a Java (registered trademark) Runtime Environment mounted on the in-vehicle PC 111 and to which the access control system of the invention is applied.

An application 501 is a Java (registered trademark) program suitable to each purpose such as a Java (registered trademark) program for implementing monitoring/control of the in-vehicle devices or a Java (registered trademark) program for playing games. This is a Java (registered trademark) program previously stored in the memory device 112 of the in-vehicle PC 111 or a Java (registered trademark) program downloaded from the distribution server 104, the monitoring server 105, etc. via a network such as the Internet 107, and is operated in a Java (registered trademark) Runtime Environment 502 which corresponds to the access control execution environment on the in-vehicle PC 111. The providing form can be sometimes a normal Java (registered trademark) application defined by Java (registered trademark) specification, and can sometimes form a Java (registered trademark) applet, MIDlet, Xlet defined similarly by Java (registered trademark) specification, a framework, a bundle, and a service defined by OSGi (The Open services Gateway Initiative).

The Java (registered trademark) Runtime Environment 502 is mounted on the in-vehicle PC 111, which is an application execution environment used for executing various applications 501. The Java (registered trademark) Runtime Environment 502 includes various API provided by Java (registered trademark) 503, an access control controller provided by Java (registered trademark) 504, a security property file 505, and an access permission management table 506.

The various API provided by Java (registered trademark) 503, of which API specification is defined by Java (registered trademark) standard specification, is formed by multiple classes which have been incorporated to the Java (registered trademark) Runtime Environment 502 beforehand. For example, it is formed by a class java.io.FileInputStream for reading files, a class java.net.Socket for implementing socket communication, etc.

The access control controller provided by Java (registered trademark) 504, of which specification is defined by Java (registered trademark) standard specification, is formed by multiple classes which have been incorporated to the Java (registered trademark) Runtime Environment 502 beforehand. For example, it is formed by a class java.security.Permission for showing access permission, a class java.security.AccessController for authorizing the access permission, etc. The access control controller provided by Java (registered trademark) 504 authorizes use access permission used by an application based on granted access permission written in the access permission management table 506.

The security property file 505, which is one of setting files maintained by the Java (registered trademark) Runtime Environment 502, is used for specifying a name of class to which a function to read the access permission management table 506 is implemented.

The access permission management table 506, which is information corresponding to a policy file provided by Java (registered trademark) Development Kit as standard, is a table for specifying a granted access permission to the application 501 and a user.

Various in-vehicle API 507 are a set of classes which provide functions for sending/receiving control command, sending/receiving monitoring information, etc. to/from various in-vehicle devices mounted on the vehicle system 101. These are Java (registered trademark) programs previously stored in the memory device 112 of the in-vehicle PC 111 or Java (registered trademark) programs downloaded from the distribution server 104, the monitoring server 105, etc. via a network, which are operated by combining with the application 501 in the Java (registered trademark) Runtime Environment 502 of the in-vehicle PC 111. These are a set of multiple classes made by compiling programs written by Java (registered trademark), which are sometimes provided as Jar files defined by Java (registered trademark) standard and sometimes provided as service forms of frameworks and bundles, though sometimes provided as usual classes.

Further, various in-vehicle API 507 are sometimes added/deleted/changed after assembling the in-vehicle PC 111. For example, when a new in-vehicle device is connected to the vehicle system 101, an in-vehicle API suitable to the in-vehicle device may be added to various in-vehicle API 507. On the contrary, when an in-vehicle device is removed from the vehicle system 101, the in-vehicle API suitable to the in-vehicle device may be deleted from the various in-vehicle API 507. Further, even if no in-vehicle device is added/deleted, the various in-vehicle API 507 may be changed in order to add a new function. Therefore, there may be a case in which no various in-vehicle API 507 exists according to the state of the vehicle system 101.

The external access control means 508 is a function to verify granted access permission which is made valid according to the state of the in-vehicle PC 111 or various in-vehicle devices mounted on the vehicle system 101. These are Java (registered trademark) programs previously stored in the memory device 112 of the in-vehicle PC 111, which is operated by combining with the Java (registered trademark) Runtime Environment 502 on the in-vehicle PC 111. An access permission judging means 509, a valid state judging means 510, and a access permission list maintaining means 511 are components of the external access control means 508.

The access permission judging means 509 is a function to judge if the application 501 has a use access permission to execute the various API provided by Java (registered trademark) 503 or the various in-vehicle API 507 based on information of the granted access permission written in the access permission management table 506.

The valid state judging means 510 is means to judge if the in-vehicle PC 111 and the various in-vehicle devices are in a state by which the granted access permission is made valid for the granted access permission judged as valid by the access permission judging means 509 based on valid state (a detail will be discussed later) written in the access permission management table 506.

The access permission list maintaining means 511 is a function to maintain an access permission read from the access permission management table 506 by the access control controller provided by Java (registered trademark) 504 and maintain a list of granted access permissions when the list of granted access permissions to the application 501 is extracted. Further, it also has a function to receive a use access permission from the external and verify if the use access permission is included in the list of granted access permissions maintained inside using the access permission judging means 509 and the valid state judging means 510 included in the external access control means 508.

The external access control means registration means 512 is a function to register the external access control means 508 to the access control controller provided by Java (registered trademark) 504 in order to call internally the external access control means 508 when the access control controller provided by Java (registered trademark) 504 of the Java (registered trademark) Runtime Environment 502 authorizes the use access permission.

Various vehicle system resources 513 are resources such as various in-vehicle devices mounted on or connected to the vehicle system 101, which does not mean only files or sockets on the in-vehicle PC 111, but all the in-vehicle devices connected to the information system LAN 117/the control system LAN 123 such as a display 113, a mobile phone A 115, an engine 118, an in-vehicle GW 124, etc. The various vehicle system resources 513 can be monitored/controlled using the various API provided by Java (registered trademark) 503 and the various in-vehicle API 507.

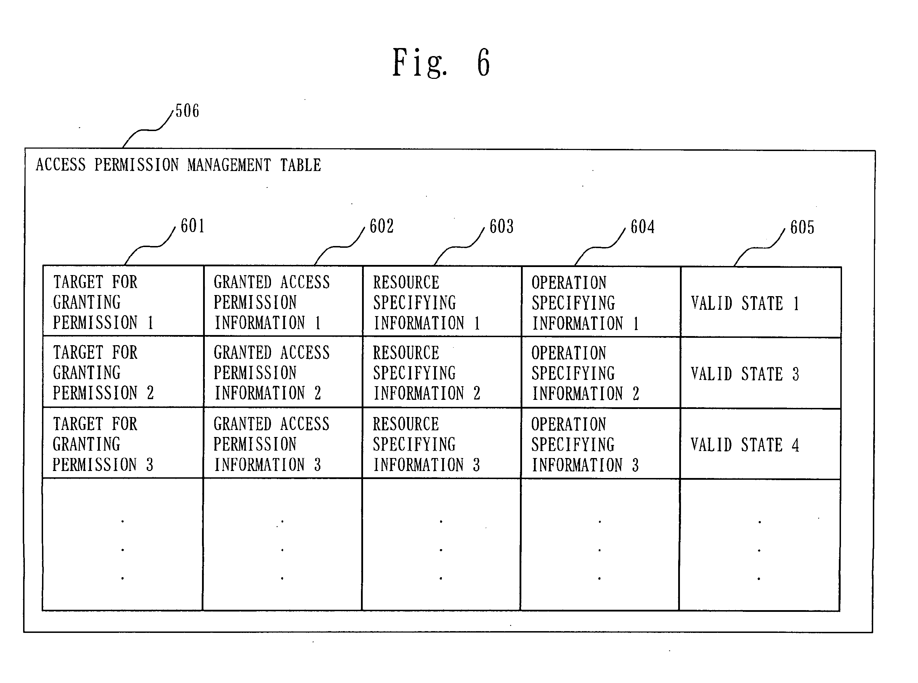

Fig. 6 is an explanatory drawing showing a configuration of the access permission management table 506.
A target for granting a permission 601 specifies a condition or a combination of multiple conditions of the application 501, the various in-vehicle API 507, etc. which are targets for giving the granted access permission. For example, a name of class, a name of Jar file, a location of the memory device 112 or the network which stores classes or Jar files, a user ID/a group ID/a role ID, etc. of a program creator, a driver, or a user (including an operator of the monitoring server 105 or the mobile phone C 102) are specified.

Granted access permission information 602 is one of information to specify what kind of granted access permission is given to a target for granting a permission 601. For example, access permission information of a file (java.io.FilePermission in case of Java (registered trademark)), access permission information of sockets (similarly, java.net.SocketPermission), etc. is specified. Further, particular access permission information defined by the user can be also specified.

Resource specifying information 603 specifies a name of resource which is a target of the granted access permission specified by the granted access permission information 602. For example, names of resources which are provided on a general computer such as a name of file, a name of directory, a name of IP address, etc. and resource specific to the vehicle system 101 such as a display 113, a door lock 119, or a velocity meter 121 are specified.

Operation specifying information 604 specifies what kind of operation is permitted or prohibited for the resources specified by the resource specifying information 603 (the current Java (registered trademark) standard specification allows to specify only a name of operation permitted). For example, if the resource is a file, a name of operation such as reading/writing/deleting, etc., in case of the IP address, a name of operation such as connecting/accepting, etc., and in case of the door lock 119, a name of operation such as locking/unlocking, etc. are specified.

A valid state 605 stores conditions under which the granted access permission specified by the granted access permission information 602/the resource specifying information 603/the operation specifying information 604 becomes valid. For example, the state of the in-vehicle PC 111 or various in-vehicle devices are specified as conditions such as "ALWAYS (any time regardless of the state)", "Load.LessThan50 (the load factor of CPU is equal to or less than 50%)", "Door.lock (while the door is locked)", "Meter.0 (while the vehicle stops)", etc. Further, it is possible to omit, and in such a case, it is assumed that the granted access permission is defined, which does not depend on the state of the in-vehicle PC 111 or various in-vehicle devices connected to the vehicle system 101 similarly to the conventional access control method.

Here, among the information written in one line of the access permission management table 506, the granted access permission information 602, the resource specifying information 603, the operation specifying information 604, and the valid state 605 are called in total as the granted access permission. This granted access permission is given to the target for granting a permission 601 written in the same line.

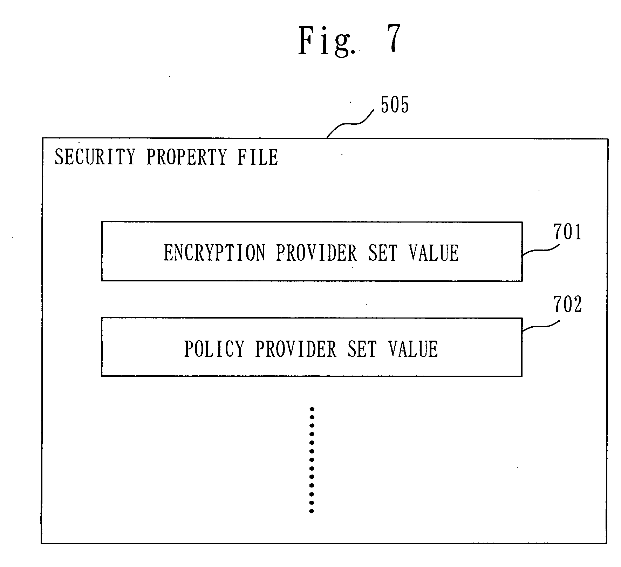

Fig. 7 is an explanatory drawing showing a configuration of the security property file 505 included in the Java (registered trademark) Runtime Environment 502.

The security property file 505 is formed by various information including an encryption provider set value 701 and a policy provider set value 702.

The encryption provider set value 701 specifies a set of master class names of the provider to which an encryption algorithm is implemented. This set value is not related to the use of the present invention.

The policy provider set value 702 is a set value to specify a name of a class having a function to read a file which stores the access permission management table 506, and further, to extract the granted access permission to be given to a class of Java (registered trademark).

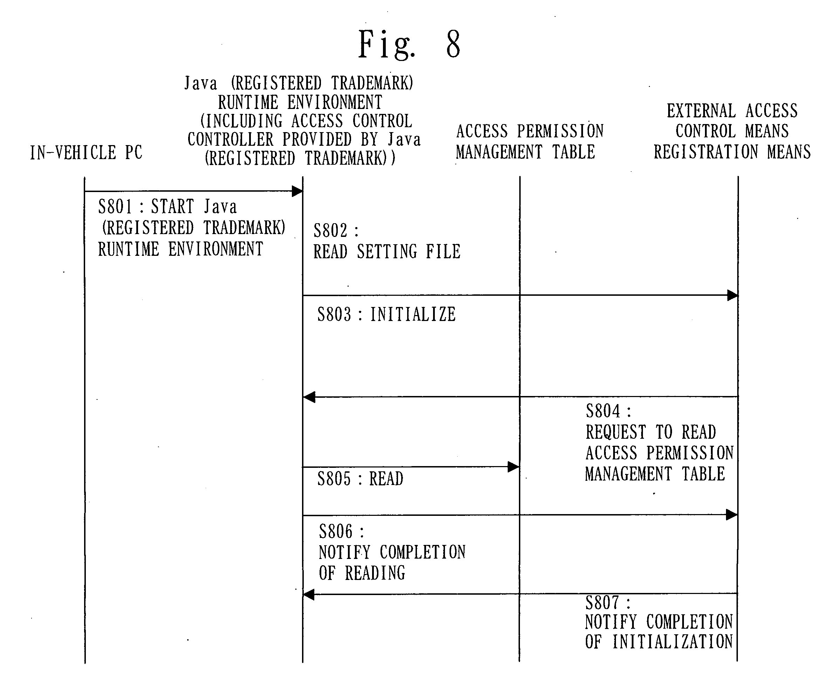

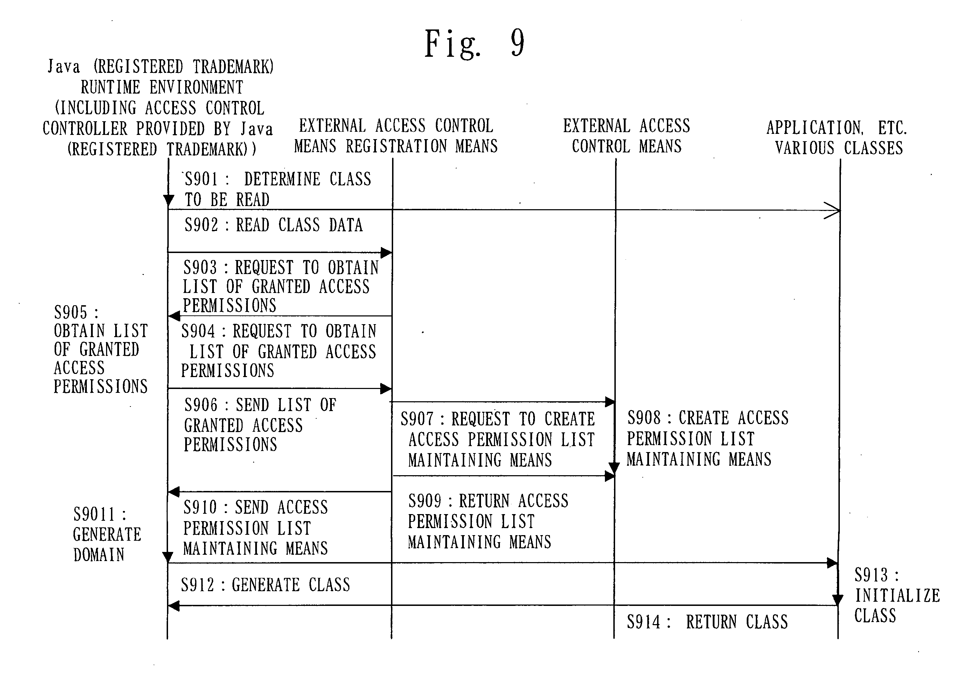

Next, an operation will be explained, in which the external access control means 508 is registered to the Java (registered trademark) Runtime Environment 502 when the Java (registered trademark) Runtime Environment 502 is started by referring to Figs. 8 and 9. When the Java (registered trademark) Runtime Environment is started, first an initialization of the Java (registered trademark) Runtime Environment and a reading operation of the access permission management table are carried out, and then, a set of granted access permissions to applications when the applications are loaded is determined.

Fig. 8 is a sequence drawing showing an operation flow of the initialization of the Java (registered trademark) Runtime Environment 502 and the reading operation of the access permission management table 506.

First, at step S801, the in-vehicle PC 111 starts the Java (registered trademark) Runtime Environment 502 automatically at the time of starting the in-vehicle PC 111 or when the application 502 is started by an instruction of a user.

At step S802, the Java (registered trademark) Runtime Environment 502 reads various setting files maintained, and carries out initialization according to the contents.

In this implementation form, the external access control means registration means 512 of the invention is implemented so as to satisfy the specification of the policy provider class, and the name of the implemented class is written on the policy provider set value 702. The initialization operation of the external access control means registration means 512 which has been set here will be discussed later subsequent to the next step S803.

At step S803, the Java (registered trademark) Runtime Environment 502 reads the external access control means registration means 512 written in the policy provider set value 702 of the security property file 505 and starts the initialization (instantiation of the class).

At step S804, the external access control means registration means 512 requests the Java (registered trademark) Runtime Environment 502 to read the access permission management table 506 as a part of the initialization. For example, it is implemented by instantiating the policy provider class which has been set before replacement, although the policy provider set value 702 is replaced with the external access control means registration means 512 at step S802.

At step S805, the Java (registered trademark) Runtime Environment 502 reads the access permission management table 506.

At step S806, the Java (registered trademark) Runtime Environment 502 notifies that reading of the access permission management table 506 is completed. Actually, it is notified by the fact that the instantiation of the policy provider class provided by the Java (registered trademark) Runtime Environment 502 carried out by the external access control means registration means 512 at step S804 is finished.

At step S807, the external access control means registration means 512 notifies the Java (registered trademark) Runtime Environment 502 of having finished the initialization. This is notified by the fact that the instantiation of the class provided by the external access control means registration means 512 started by the Java (registered trademark) Runtime Environment 502 at step S803 is finished.

Fig. 9 is a sequence drawing showing an operation flow of determining a set of granted access permissions to the application when a class which forms the application 501 is read.

First, at step S901, the Java (registered trademark) Runtime Environment 502 determines a class to be read among classes necessary for executing the application 501.

At step S902, the Java (registered trademark) Runtime Environment 502 searches for the class determined at step S901 out of readable classes and Jar files and reads the file. Then, URI (Uniform Resource Identifiers) of the class file which has been read or the Jar file including the class file, and a signer of the Jar file are obtained as code source which is an attribute of the class which has been read. If a file of the class to be read is not found, the operation is finished at this point because of reading error.

At step S903, the Java (registered trademark) Runtime Environment 502 specifies the code source obtained at step S902 to the external access control means registration means 512 and requests to obtain a list of the granted access permissions to be assigned to the code source.

At step S904, the external access control means registration means 512 requests the policy provider class provided by the Java (registered trademark) Runtime Environment 502 which has been generated at step S804 to obtain a list of the granted access permissions corresponding to the code source which has been received at step S903.

At step S905, the policy provider class of the Java (registered trademark) Runtime Environment 502 extracts a list of the granted access permissions corresponding to the specified code source by comparing the target for granting a permission 601 of the access permission management table 506 with the code source received at step S904 based on the information read from the access permission management table 506.

At step S906, the policy provider class sends the list of the granted access permissions generated at step S905 to the external access control means registration means 512.

At step S907, the external access control means registration means 512 requests the external access control means 508 to generate access permission list maintaining means 511 using the list of the granted access permissions received at step S906 as a parameter. This can be implemented by requesting instantiation of the classes provided by the access permission list maintaining means 511.

At step S908, the access permission list maintaining means 511 of the external access control means 508 stores the access permission list maintaining means 511 maintaining the list of the granted access permissions received at step S907 internally.

At step S909, the access permission list maintaining means 511 of the external access control means 508 sends the access permission list maintaining means 511 generated at step S908 to the external access control means registration means 512. This can be implemented by returning the instance of the class provided by the access permission list maintaining means 511 generated at step S908..

At step S910, the external access control means registration means 512 sends the access permission list maintaining means 511 received from the external access control means 508 at step S909 to the Java (registered trademark) Runtime Environment 502.

At step S911, the Java (registered trademark) Runtime Environment 502 generates a domain using the access permission list maintaining means 511 received at step S910. This domain is a concept corresponding to ProtectionDomain defined by Java (registered trademark) standard specification and is information formed by the code source and the list of the granted access permissions. All the classes used on the Java (registered trademark) Runtime Environment 502 belong to one of domains, and the access control is done by the access control controller provided by Java (registered trademark) 504 so that the operation can be done within a range of the list of the granted access permissions assigned to the domain.

At step S912, the Java (registered trademark) Runtime Environment 502 generates a class necessary for executing the application 501 using the files of the class read at step S902 and the domain generated at step S911.

At step S913, an initialization operation of the class is carried out for the class necessary for executing the application 501.

At step S914, for the class necessary for executing the application 501, the class read is returned.

Through the procedure shown by the above steps S901 - S914, only one class necessary for executing the application 501 is loaded. Since, generally, many classes are needed for executing one application 501, classes are loaded by carrying out the above operations for all the classes.

As discussed, activation of the Java (registered trademark) Runtime Environment 502 and load of classes necessary for executing the application 501 are completed by carrying out the procedure shown in Figs. 8 and 9, and execution of the application 501 is started by the Java (registered trademark) Runtime Environment 502.

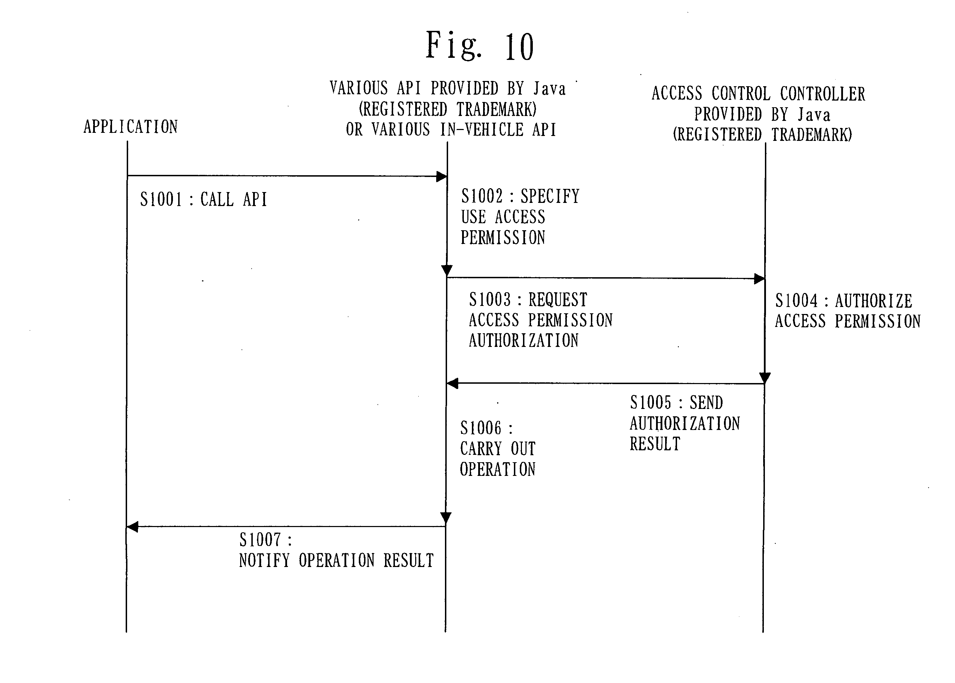

Next, by referring to Figs. 10, 11, and 12, an operation will be explained, in which access control is done according to state of the vehicle when the application 501 operated in the Java (registered trademark) Runtime Environment 502 calls the various API provided by Java (registered trademark) 503 or the various in-vehicle API 507.

Fig. 10 is an explanatory drawing showing how the access control controller provided by Java (registered trademark) 504 is called when the application 501 calls the various API provided by Java (registered trademark) 503 or the various in-vehicle API 507.

First, at step S 1001, the application 501 calls the various API provided by Java (registered trademark) 503 or the various in-vehicle API 507.

At step S1002, the various API provided by Java (registered trademark) 503 or the various in-vehicle API 507 specifies a use access permission which has to be granted to the application 501 for carrying out the operation.

At step S1003, the various API provided by Java (registered trademark) 503 or the various in-vehicle API 507 explicitly calls the access control controller provided by Java (registered trademark) 504 and requests access permission authorization in order to authorize if the application 501 has the use access permission as the granted access permission or not.

At step S1004, the access control controller provided by Java (registered trademark) 504 carries out the access permission authorization to check if the use access permission received at step S1003 is included in the list of the granted access permissions maintained by the application 501. A detailed flow of this operation will be described later.

At step S1005, the access control controller provided by Java (registered trademark) 504 sends a result of the access permission authorization to the various API provided by Java (registered trademark) 503 or the various in-vehicle API 507.

At step S1006, the various API provided by Java (registered trademark) 503 or the various in-vehicle API 507 carries out the operation requested by the application 501 if the result of step S1005 shows "with access permission". If it is judged as "without access permission", the operation is not carried out.

At step S1007, if it is judged as "with access permission" at step S1005, the various API provided by Java (registered trademark) 503 or the various in-vehicle API 507 returns the result of the operation. If it is judged as "without access permission" and the operation is not done at step S1006, it is notified as the result of the operation that the operation is invalid because the access permission is not included.

By the above procedure, the operation flow showing the operations of calling the access control controller provided by Java (registered trademark) 504 to do the access permission authorization when the application 501 calls the various API provided by Java (registered trademark) 503 or the various in-vehicle API 507.

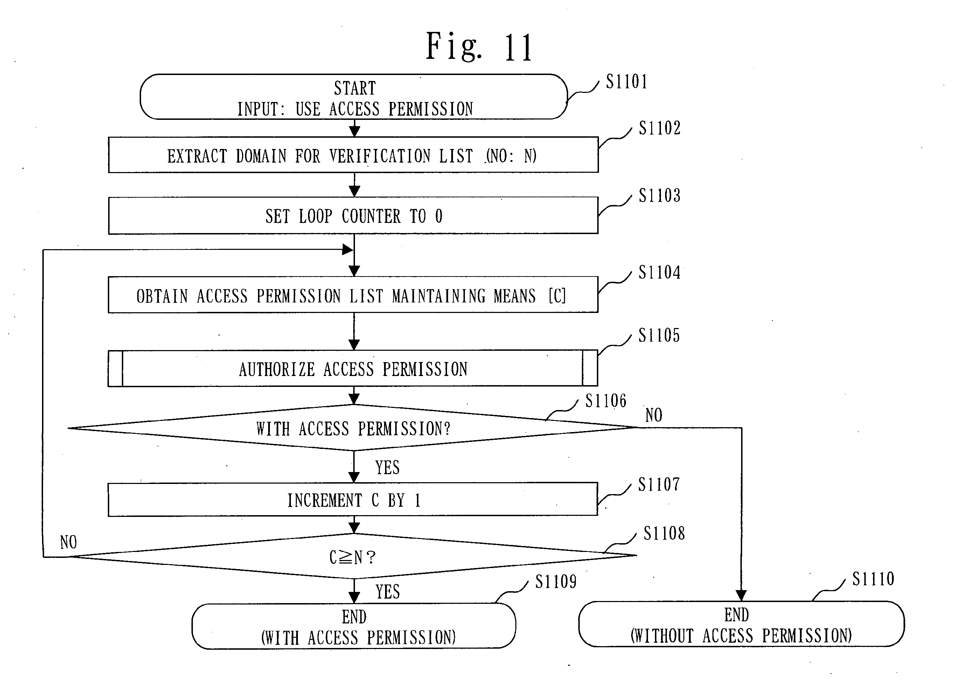

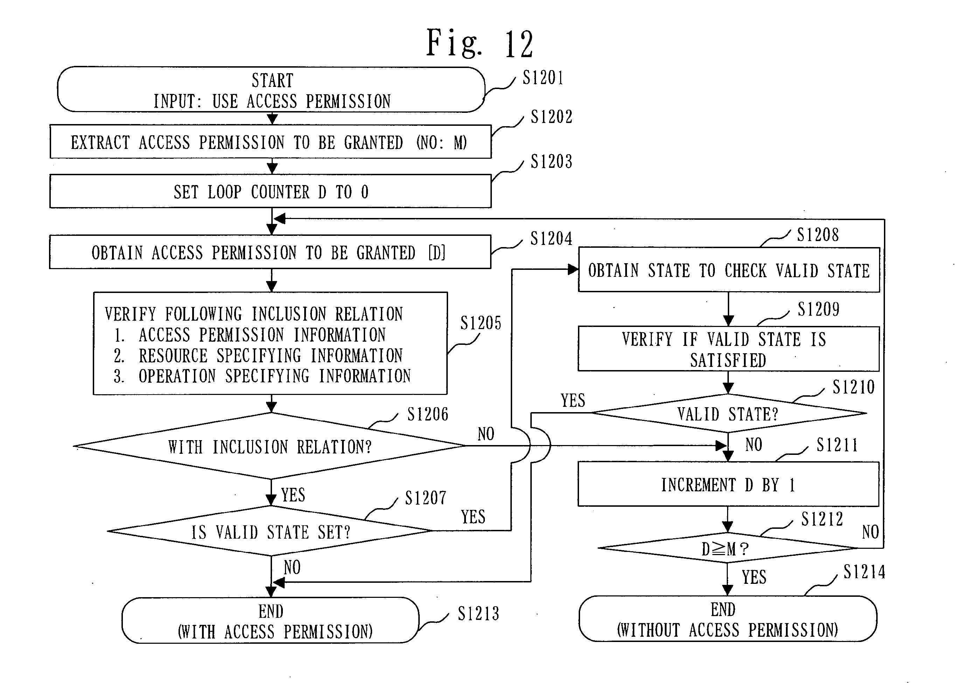

Next, by referring to Figs. 11 and 12, a detailed flow of the operation of step S1004 of Fig. 10 will be explained. Fig. 11 is an explanatory drawing showing a detail of step S1004 for carrying out the access permission authorization, and Fig. 12 is an explanatory drawing showing a detail of step S1105 of Fig. 11 for carrying out the access permission authorization using the access permission stored in an access permission list maintaining means [C].

First, when the operation of step S1004 of Fig. 10 is started, step S1101 of Fig. 11 is called. At step S 1101, the access control controller provided by Java (registered trademark) 504 receives the use access permission from the various API provided by Java (registered trademark) 503 or the various in-vehicle API 507 for checking if it is included in the list of the granted access permissions granted to the application 501 or not.

At step S1102, the access control controller provided by Java (registered trademark) 504 extracts a list of domains of search target for checking if the use access permission is included or not. At this time, it is assumed that the number of domains of search target is N, and a number of 0 through (N-1) is assigned to each of the domains of search target. Here, the domains of search target is the same as the domains generated at step S911 of Fig. 9, which are domains of target to search if the use access permission is included or not. At this step S 1102, a domain to which each class belongs is extracted for all the classes that have been executed until the access control controller provided by Java (registered trademark) 504 is called from the application 501. However, if a privileged block defined by Java (registered trademark) specification is used, the operation to extract domains is not done for the classes located at an application side from the privileged block.

At step S 1103, the access control controller provided by Java (registered trademark) 504 sets a loop counter C for loop operation to 0.

At step S 1104, the access control controller provided by Java (registered trademark) 504 obtains the C-th domain of search target out of a list of the domains of search target extracted at step S 1102, and obtains the access permission list maintaining means 511 assigned to the domain of search target. The in-vehicle PC 111 obtained here is the access permission list maintaining means 511 generated at step S908 of Fig. 9, which is featured to additionally have a function to carry out the access permission authorization using the access permission judging means 509 and the valid state judging means 510 of the external access control means 508.

At step S1105, the access control controller provided by Java (registered trademark) 504 sends the use access permission to the access permission list maintaining means 511 obtained at step S1104 and requests authorization of the access permission.

Next, the explanation of the operation flow of Fig. 11 is interrupted, and a detail of the operation of step S 1104 of Fig. 11 will be explained.

First, at step S1201, the access permission list maintaining means 511 receives the use access permission which is desired to be verified if it is included in a list of the granted access permissions maintained by the access permission list maintaining means 511 from the access control controller provided by Java (registered trademark) 504 and the operation is started.

At step S1202, the access permission list maintaining means 511 of the external access control means 508 takes out the list of the granted access permissions stored inside of the access permission list maintaining means 511. Here, it is assumed that the number of the granted access permissions is M, and a number of 0 through (M-1) is assigned to each of the granted access permissions.

At step S1203, the access permission list maintaining means 511 of the external access control means 508 sets a loop counter to 0.

At step S1204, the access permission list maintaining means 511 of the external access control means 508 obtains the D-th granted access permission out of the list of the granted access permissions obtained at step S1202.

At step S1205, the access permission judging means 509 of the external access control means 508 compares to check if the granted access permission information 602, the resource specifying information 603, and the operation specifying information 604 of the use access permission are included in the granted access permission information 602, the resource specifying information 603, and the operation specifying information 604 maintained by the granted access permission. Here, the class to show the granted access permission belongs to the access permission list maintaining means 511, and since the operation method for comparing is implemented, it is accomplished by requesting the method to carry out the operation.

At step S 1206, the access permission list maintaining means 511 of the external access control means 508 judges if the use access permission is included in the granted access permission or not as a result of step S1205. If it is included, the operation moves to step S1207 for verifying the valid state 605 assigned to the granted access permission. If it is not included, the operation moves to step S1211 to move to an operation for comparing with the next granted access permission.

At step S1207, the access permission list maintaining means 511 of the external access control means 508 judges if a condition of the valid state 605 is set in the granted access permission or not. If it is set, the operation moves to step S1208 for judging the valid state. If it is not set, the operation moves to step S1213, and the operation is finished as "with access permission". Here, when "ALWAYS (valid any time)" is set as the valid state 605, the operation moves to step S1213 similarly to the case in which the valid state 605 is not set, and the operation is finished as "with access permission".

At step S1208, the valid state judging means 510 of the external access control means 508 obtains the state of the vehicle system 101 and the in-vehicle PC 111 which are necessary for judging the valid state 605. This state can be obtained by calling the various API provided by Java (registered trademark) 503 and the various in-vehicle API 507.

At step S1209, the valid state judging means 510 of the external access control means 508 verifies if the valid state 605 specified in the granted access permission is satisfied or not based on the state obtained at step S1208.

At step S1210, from the result of judging the valid state 605 is satisfied or not at step S1209, if it is judged as a valid state, the access permission list maintaining means 511 of the external access control means 508 moves the operation to step S1213, and the operation is finished as "with access permission". If it is judged as an invalid state, the operation moves to step S1211 to move to a comparing operation with the next granted access permission.

At step S1211, the access permission list maintaining means 511 of the external access control means 508 increments a value of a loop counter D by 1.

At step S1212, the access permission list maintaining means 511 of the external access control means 508 compares the loop counter D with the number M of the granted access permissions. If D<M, there remains unverified granted access permission, the operation returns to step S1204. If D≧M, since it means the verification of all the granted access permissions is finished and no granted access permission is found to be valid, the operation moves to step S1214, and the operation is finished as "without access permission".

Next, the operation will be explained again regarding operations subsequent to step S1105 of Fig. 11.

At step S1116, the access control controller provided by Java (registered trademark) 504 verifies if the result of step S1105 is judged as "with access permission" or not. If it is judged as "with access permission", the operation moves to step S 1107. If it is judged as "without access permission", the operation moves to step S1110, and the operation is finished as "without access permission".

At step S1107, the access control controller provided by Java (registered trademark) 504 increments the loop counter C by 1.

At step S 1108, the access control controller provided by Java (registered trademark) 504 compares the loop counter C with the number N of the list of domains of search target. If C<N, there remains unverified domain of search target, so that the operation returns to step S1104. If C≧N, since it means the verification of all the domains of search target is finished and all the domains of search target are judged as "with access permission", the operation moves to step S 1109, and the operation is finished as "with access permission".

By the procedure shown in Figs. 11 and 12, the access control controller provided by Java (registered trademark) 504 and the external access control means 508 work together to authorize the access permission.

Further, the external access control means registration means 512 can be started only by changing the policy provider set value 702 of the security property file 505 which is prepared in standard by the Java (registered trademark) Runtime Environment 502 as shown in Fig. 7. Therefore, without modifying the program of the existing Java (registered trademark) Runtime Environment 502, it is possible to start the external access control means registration means 512 and add an operation of the external access control means 508 for carrying out a unique access permission authorization.

Further, in the access permission management table 506, in addition to the target for granting a permission 601, the granted access permission information 602, the resource specifying information 603, and the operation specifying information 604 provided by the standard Java (registered trademark) Runtime Environment 502, it is possible to write the valid state 605 to show which state of the vehicle 101 makes the access permission valid. Therefore, it is possible to specify the access permission which becomes valid according to the state of the vehicle.

Further, in the access permission management table 506, since "valid any time" can be specified as the valid state 605, it is possible to use the access permission which is valid regardless of the state of the vehicle.

Further, in the access permission list maintaining means 511, the operation is delegated to the access control controller provided by Java (registered trademark) 504 when the access permission authorization is done, and by using the access permission judging means 509 and the valid state judging means 510, the state of the vehicle is obtained to check if the valid state 605 is satisfied or not, in addition to the access permission judgment based on the granted access permission information 602, the resource specifying information 603, and the operation specifying information 604. By this, even if the access permission which is valid according to the state of the vehicle is granted to the application 501, it is possible to correctly judge if the granted access permission is a valid state or not, and to correctly authorize the access permission of the application 501.

Further, the Java (registered trademark) specification has a feature that a developer of the application can freely add the access permission. Since the present invention is implemented to add the valid state 605 by extending the access permission management table 506 which is prepared by the Java (registered trademark) standard, it is possible to specify, not only the access permission provided by the OS, but also the access permission which has been added by the developer of the application as the access permission which is valid according to the state of the vehicle.

Further, in the vehicle system 101, it is considered that the various in-vehicle API 507 is added to/deleted from/changed after shipping the product such as when a new in-vehicle device is additionally connected to the vehicle. Then, the granted access permission information 602, the resource specifying information 603, and the operation specifying information 604 are sometimes added to the access permission management table 506 to use the various in-vehicle API 507. The external access control means 508 delegates the comparing operation of the granted access permission information 602, the resource specifying information 603, and the operation specifying information 604 to the comparing operation provided at the granted access permission. Therefore, even if a new granted access permission is added after shipping the product, there is no need to modify the external access control means 508, but it is possible to adapt the new access permission.

Here, the present embodiment has shown the form in which the external access control means registration means 512 is provided in order to execute the external access control means 508 at the time of authorizing the access permission. However, if source of the access control controller provided by Java (registered trademark) 504 can be modified, the operation to call the access permission list maintaining means 511 can be additionally written to the source of the access control controller provided by Java (registered trademark) 504 directly.

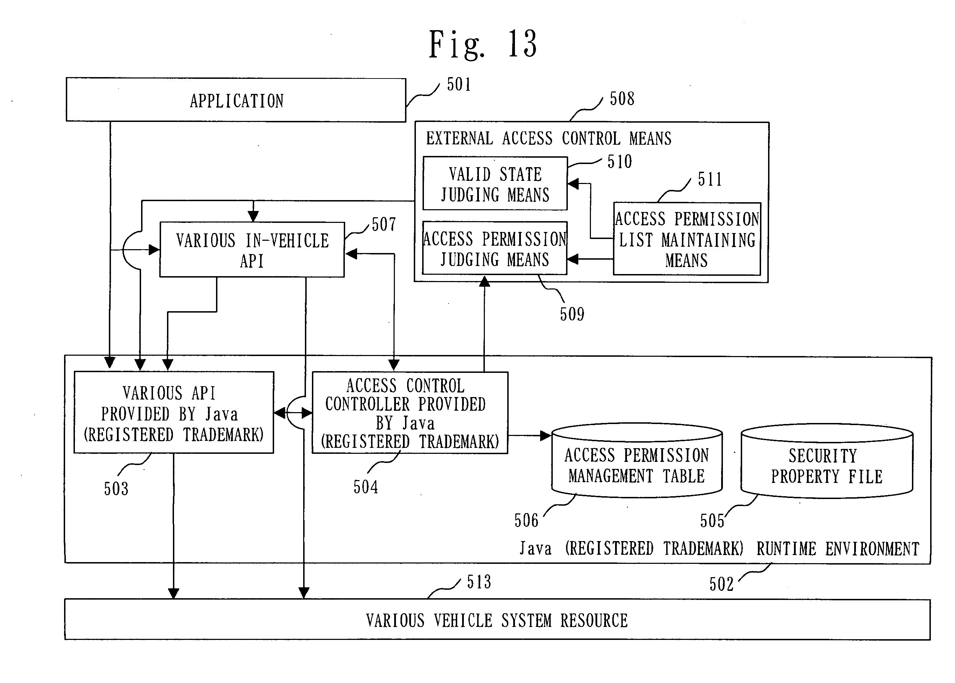

In such a case, the functional configuration shown in Fig. 5 becomes one as shown in Fig. 13. Concretely, the external access control means registration means 512 is unnecessary.

Further, as for the operation to start the application 501, intervention of the external access control means registration means 512 is unnecessary. Concretely, the policy provider set value 702 shown in Fig. 12 remains at the initial set value of the Java (registered trademark) Runtime Environment 502. Further, in the operation flow shown in Fig. 8, the access permission management table 506 is directly read without calling the external access control means registration means 512 by the Java (registered trademark) Runtime Environment 502. Further, in the operation flow shown in Fig. 9, the access permission list maintaining means 511 of the external access control means 508 is generated directly by the Java (registered trademark) Runtime Environment 502 to generate a domain.
Further, the operation flow shown in Figs. 10, 11, and 12 are basically the same.

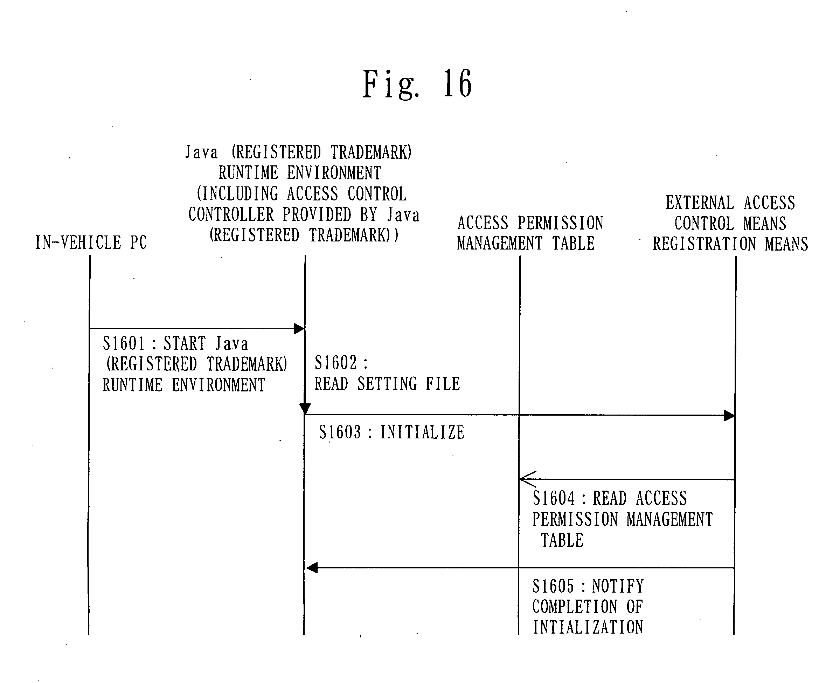

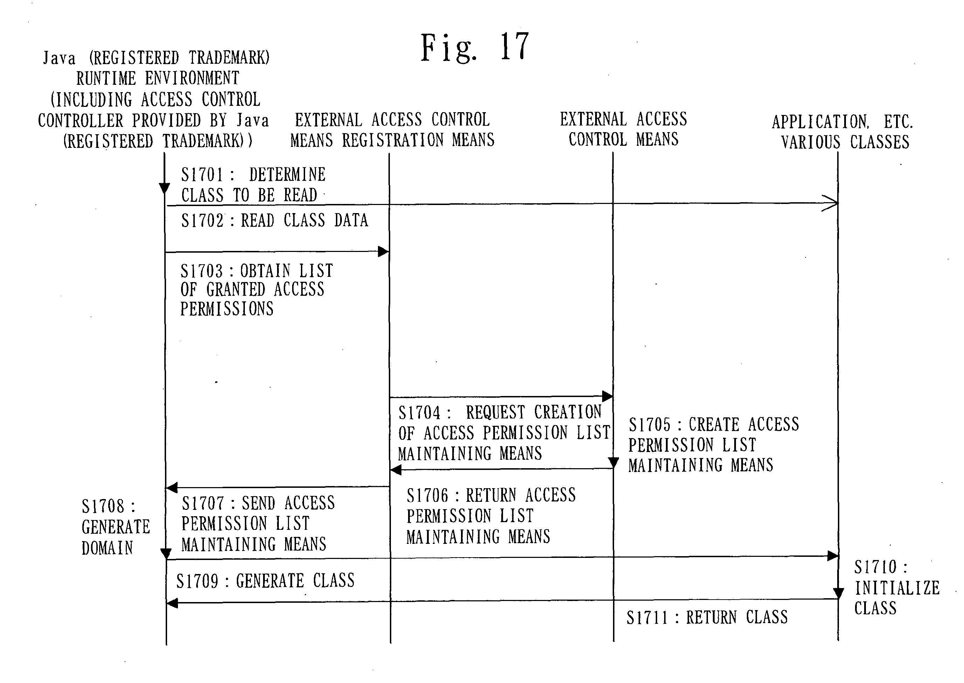

Further, the operation flow shown in Fig. 8 can be changed to one shown in Fig. 16, in which the request for reading the access permission management table is directly sent from the external access control means registration means 512 to the access permission management table 506. In this case, the operation flow is changed to one shown in Fig. 17, in which the operation of obtaining the list of granted access permissions is unnecessary in the Java (registered trademark) Runtime Environment 502.
Further, the operation flow shown in Figs. 10, 11, and 12 are basically the same.

Further, it is also possible to incorporate the operation of the access permission list maintaining means 511 of the external access control means 508 to the access control controller provided by Java (registered trademark) 504 provided by the Java (registered trademark) Runtime Environment 502.

Further, in the present embodiment, the method has been shown, in which the external access control means registration means 512 is implemented so as to satisfy the specification of the policy provider class and the external access control means 508 is registered to the access control controller provided by Java (registered trademark) 504. However, an example of implementing the external access control means registration means 512 is not limited to the policy provider class, but another implementing example can be provided such as a security manager, etc.

Further, in the present embodiment, it is assumed the Java (registered trademark) Runtime Environment 502 is used as the execution environment of the application program and the optimal embodiment in the Java (registered trademark) Runtime Environment 502 has been discussed. However, the present invention is not limited to application to the Java (registered trademark) Runtime Environment 502, but can be also applied to execution environment of another application such as Windows (registered trademark), MacOS (registered trademark), Linux (registered trademark), Symbin (registered trademark), etc.

Further, in the present embodiment, a case has been explained in which the external access permission management table used for access control by the external access control means 508 is incorporated to the access permission management table 506. However, the external access permission management table used by the external access control means 508 does not need to be in the same file with the access permission management table 506 provided by the Java (registered trademark) Runtime Environment 502, but can be maintained and managed as a separate file.

Further, the present embodiment has been explained, in which the access control of the invention is applied to the in-vehicle PC 111; however, the application is not limited to the in-vehicle PC 111, but can be applied to equipments connected to various devices such as a home server, a mobile phone, etc. via a wire or wirelessly.

Further, at step S1202 of the operation flow shown in Fig. 12, all the granted access permissions are obtained regardless of the valid state specified in the access permission management table 506 or not and operation is done from step S1203 to step S1212. This can be done in another way with two steps: first the granted access permissions to which no valid state 605 is set is obtained and verified; and then the granted access permissions to which the valid state 605 is set is obtained and verified.

Embodiment 2.
The above first embodiment has been explained, in which the valid state judging means 510 installed in the external access control means 508 verifies if the state of the in-vehicle PC 111 or the vehicle system 101 is valid or not.

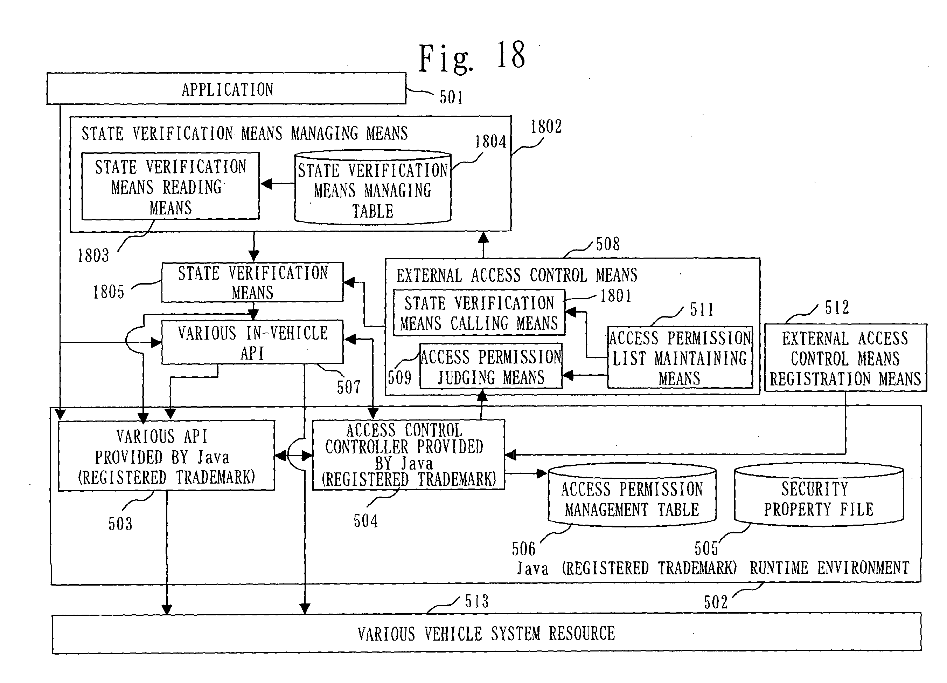

In addition to the above, the second embodiment will explain another case, in which conditions to be set as the valid state 605 can be added easily without customizing the program of the valid state judging means 510 of the external access control means 508. Fig. 18 is an explanatory drawing showing a functional configuration of the Java (registered trademark) Runtime Environment 502 according to the second embodiment.

Since the application 501, the Java (registered trademark) Runtime Environment 502, the various API provided by Java (registered trademark) 503, the access control controller provided by Java (registered trademark) 504, the security property file 505, the access permission management table 506, the various in-vehicle API 507, the external access control means registration means 512, and the various vehicle system resources 513 are the same as ones shown in the first embodiment, and the explanation is omitted.

The external access control means 508 is a function to judge the granted access permission which is valid according to the state of various in-vehicle devices mounted on the in-vehicle PC 111 or the vehicle system 101. This is a Java (registered trademark) program stored in the memory device 112 of the in-vehicle PC 111 beforehand and is operated by combining with the Java (registered trademark) Runtime Environment 502 on the in-vehicle PC 111. Components of the external access control means 508 include the access permission judging means 509, the access permission list maintaining means 511, and the state verification means calling means 1801.

The access permission judging means 509 is the same as one shown in the first embodiment, which is a function to judge if the application 501 has the use access permission for executing the various API provided by Java (registered trademark) 503 and the various in-vehicle API 507 based on the granted access permissions information written in the access permission judging means 509.

The access permission list maintaining means 511 is the same as one shown in the first embodiment, which is a function to maintain the granted access permission read from the access permission management table 506 by the access control controller provided by Java (registered trademark) 504 and to maintain a list of granted access permissions when the list of granted access permissions to be given to the application 501 is extracted. Further, it has a function to receive the use access permission from the outside and to authorize if the use access permission is included in the list of granted access permissions maintained internally. However, it is different from the first embodiment in that the access permission judging means 509 and the state verification means calling means 1801 included in the external access control means 508 are used.

The state verification means calling means 1801 obtains a set of the state verification means 1805 from the state verification means managing means 1802 based on the valid state 605 written in the access permission management table 506. Then, using the set of the state verification means 1805 obtained, it is means to judge if the state of various in-vehicle devices mounted on the in-vehicle PC 111 or the vehicle system 101 is in the valid state 605 assigned to the granted access permission.

The state verification means managing means 1802 is means newly introduced in the second embodiment, which is a function to manage the state verification means 1805 for verifying if the valid state 605 set in the access permission management table 506 is satisfied or not and to dynamically read the state verification means 1805 in response to a request from the external access control means 508. This is a Java (registered trademark) program stored in the memory device 112 of the in-vehicle PC 111 beforehand and is operated by combining with the Java (registered trademark) Runtime Environment 502 on the in-vehicle PC 111 and the external access control means 508. Components of the state verification means managing means 1802 include a state verification means reading means 1803 and a state verification means management table 1804.

The state verification means reading means 1803 provides a function to dynamically read at least one of the state verification means 1805 in response to a request from the external access control means 508. Further, it provides a class which defines an abstract method to be installed in the state verification means 1805 or an interface.

The state verification means management table 1804 is a table to manage correspondence between the valid state 605 written in the access permission management table 506 and the state verification means 1805 for verifying if the valid state 605 is satisfied or not.

The state verification means 1805 is a set of means to verify if the state of the in-vehicle PC 111 or the vehicle system 101 is valid or not. This is a Java (registered trademark) program stored in the memory device 112 of the in-vehicle PC 111 beforehand or downloaded from a maintenance server 104, the monitoring server 105, etc. via network, and is operated by combining with the external access control means 508 and the state verification means managing means 1802 in the Java (registered trademark) Runtime Environment 502 of the in-vehicle PC 111. This is a set of multiple classes compiled from the program written in Java (registered trademark), is sometimes provided as a normal class, and sometimes provided as a Jar file defined by the Java (registered trademark) specification, or in a form of framework, a bundle, or service defined by OSGi.

Further, the state verification means 1805 is sometimes added/deleted/changed after assembling the in-vehicle PC 111. For example, when a new Java (registered trademark) program is added to/deleted from/changed in the in-vehicle PC 111, and if it is necessary to add a new valid state 605 to make the program work, the state verification means 1805 is sometimes added/deleted/changed.

Further, even when the additional installation of the Java (registered trademark) program is not done, if conditions to permit the access permission is changed due to amendment of the law, the state verification means 1805 is sometimes added/deleted/changed. Therefore, there is sometimes no state verification means 1805 according to the in-vehicle PC 111.

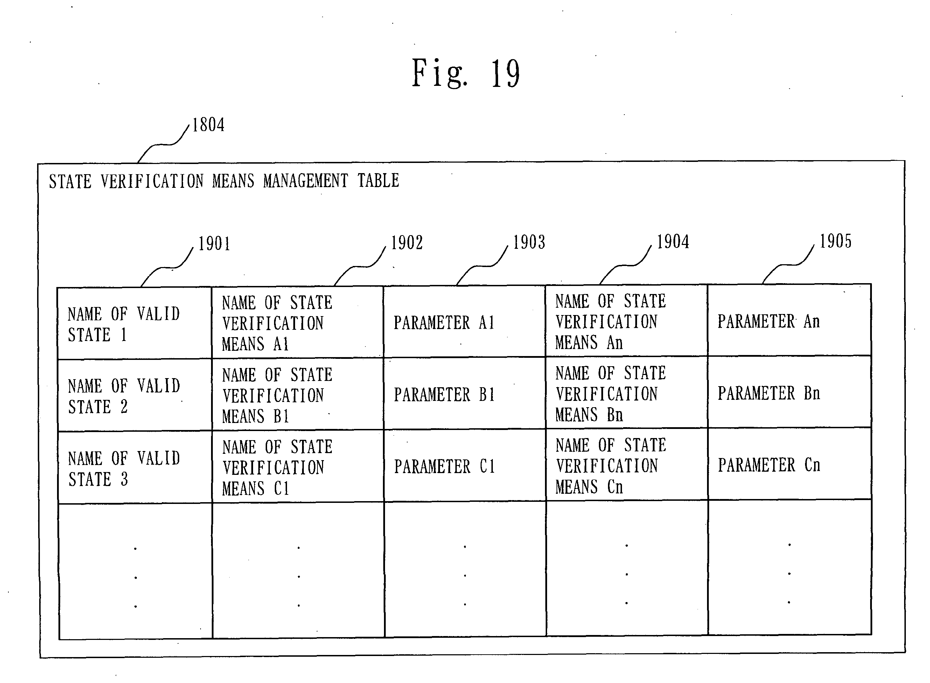

Fig. 19 is an explanatory drawing showing a configuration of the state verification means management table 1804.

A name of valid state 1901 is to write a value which can be made correspondent with the valid state 605written in the access permission management table 506, and in the simplest case, the same value with the valid state 605 is specified. This element is used for making correspondence with a set of the state verification means 1805 for verifying if it is in the valid state 605 or not. For example, it is desirable to specify a value by which the state of the in-vehicle PC 111 or various in-vehicle devices should be checked is understood easily such as "ALWAYS (any time regardless of the state)", "Load.LessThan50 (the load factor of CPU is equal to or less than 50%)", "Door.lock (while the door is locked)", "Meter.0 (while the vehicle stops)", etc.

A name of state verification means 1902 is a value used for determining the state verification means 1805 for verifying if it is in the valid state 605 or not. For example, the name of the class to which the state verification means 1805 is implemented is written as the name of state verification means 1902 and so on. It is possible to write multiple pieces of the name of state verification means 1902 for each of the name of valid state 1901. For example, "jp.co.melco.Stop" is specified as the name of state verification means 1902 for verifying if it is stopping or not, and at the same time "jp.co.melco.Daytime" can be specified for verifying if it is daytime or not.

A parameter 1903 is a parameter which is set at the time of initialization of the state verification means 1805 written in the name of state verification means 1902 or set after the initialization. It is possible to specify a value different for each of the state verification means 1805 written in the name of state verification means 1902 as the parameter 1903, and it is also possible to omit. For example, if "jp.co.melco.CPULoadAverage" is specified as the name of state verification means 1902 for verifying if the CPU load factor is equal to or less than a predetermined value, "0.5" can be specified as this parameter.

In the following, a flow of access control according to the present embodiment will be explained.

First, at the time of starting the Java (registered trademark) Runtime Environment 502, the operation by which the access control method of the invention registers the external access control means 508 with the Java (registered trademark) Runtime Environment 502 is the same as one of the first embodiment shown in Figs. 8 and 9, and the explanation is omitted.

Next, when the application 501 operated in the Java (registered trademark) Runtime Environment 502 calls the various API provided by Java (registered trademark) 503 or the various in-vehicle API 507, among the operations for access control according to the state of the vehicle, the operation from the application 501 to the access control controller provided by Java (registered trademark) 504 is the same as the operation flow of Figs. 10 and 11 shown in the first embodiment, and the explanation is omitted.

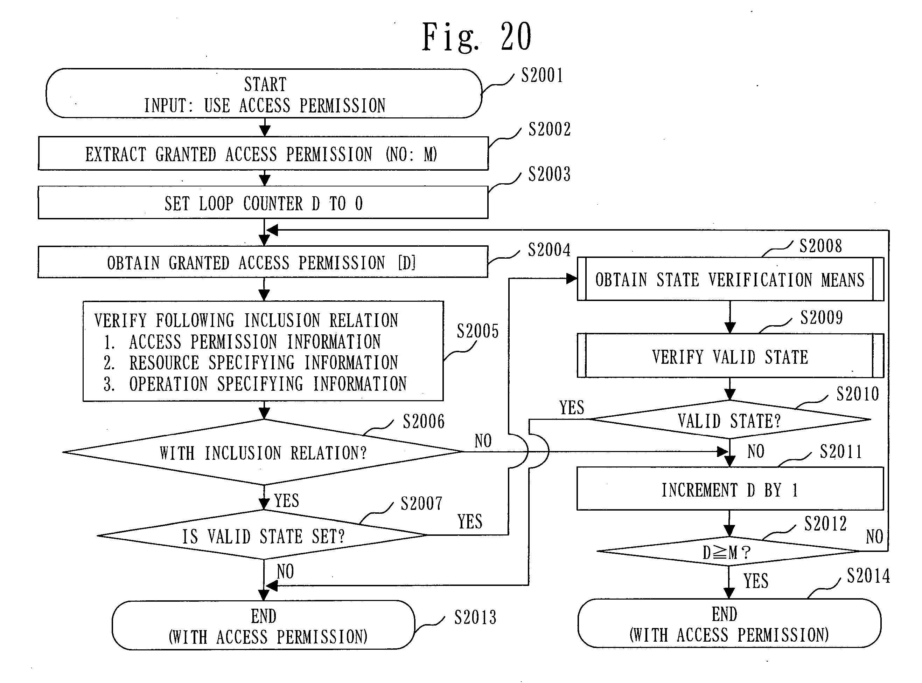

Here, the operation flow shown in Fig. 20 is an operation of the external access control means 508 which is called by the access control controller provided by Java (registered trademark) 504. Since the operation flow from the above is changed a little from the one of Fig. 12 shown in the first embodiment, the different point will be mainly discussed in the following.

First, the operation of steps S2001 through S2007 are the same as ones of steps S1201 through S1207, so that the explanation is omitted.

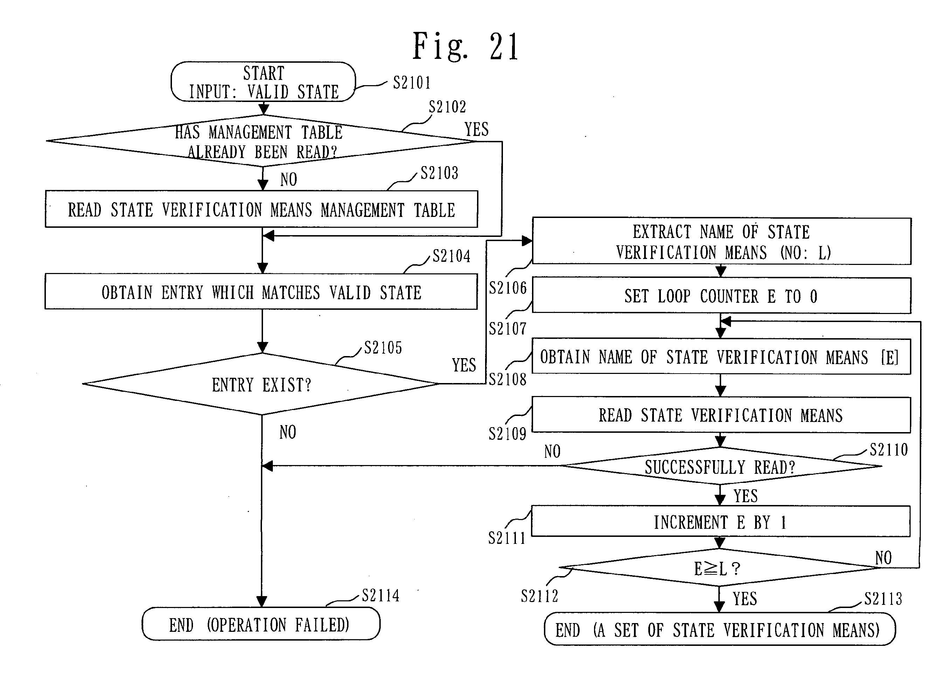

At step S2008, the state verification means calling means 1801 of the external access control means 508 extracts the valid state 605 set in the granted access permission and requests the state verification means reading means 1803 of the state verification means managing means 1802 to read a set of the state verification means 1805. A detail of this operation will be discussed later by referring to Fig. 21.

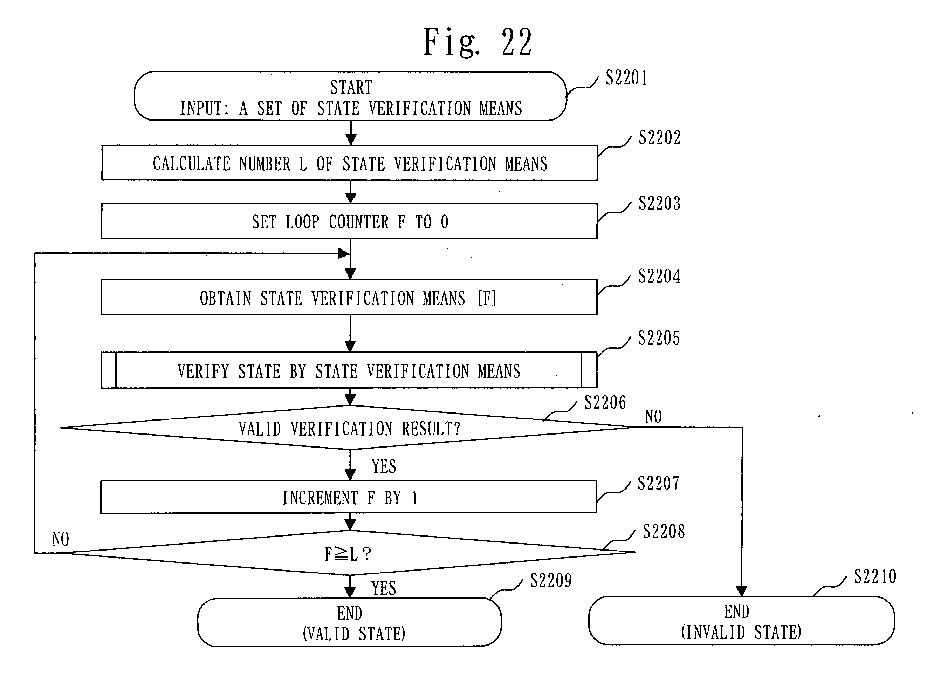

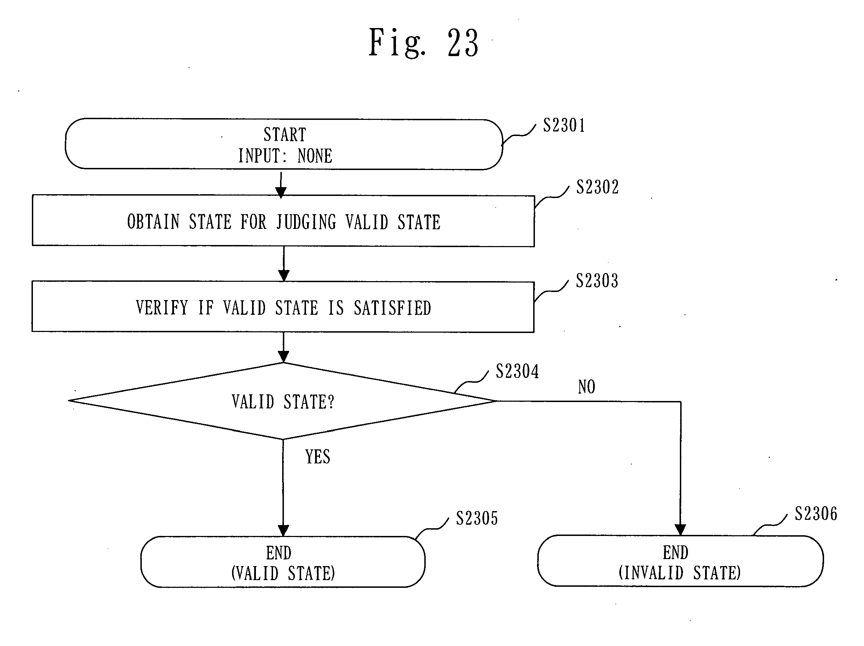

At step S2009, the state verification means calling means 1801 of the external access control means 508 verifies if the state of the in-vehicle PC 111 or the vehicle system 101 is in the state which makes the granted access permission valid or not using the set of the state verification means 1805 obtained at step S2008. A detail of this operation will be discussed later by referring to Figs. 22 and 23.

Since the operation of steps S2010 through S2014 is the same as one of steps S1210 through S 1214, the explanation is omitted.

Fig. 21 is an operation flow when the set of the state verification means 1805 for verifying if the valid state 605 is satisfied or not based on the valid state 605 which makes the granted access permission valid.

First, at step S2101, the state verification means reading means 1803 receives the valid state 605 from the state verification means calling means 1801 of the external access control means 508 as information showing which of the set of the state verification means 1805 is to be generated and starts the operation.

At step S2102, the state verification means reading means 2003 confirms if the state verification means management table 1804 has been read from the file or not. If it has been read already, the operation jumps to step S2104. If not, the operation moves to S2103.

At step S2103, the state verification means reading means 1803 reads the state verification means management table 1804, interprets the information written therein, and stores it inside of the state verification means reading means 1803.

At step S2104, the state verification means reading means 1803 searches for an entry of which the valid state 605 received at step S2101 matches the name of valid state 1901 of the state verification means management table 1804 from a copy of the state verification means management table 1804 stored in the state verification means reading means 1803 inside and obtains it.

At step S2105, the state verification means reading means 1803 judges if the corresponding entry is found by the operation at step S2104. If the corresponding entry is found, the operation moves to step S2106. If the corresponding entry is not found, the operation moves to S2114, and the operation is finished as "operation failed".

At step S2106, the state verification means reading means 1803 obtains the number of the names of state verification means 1902 set from the entries obtained at step S2104. Here, numbers from 0 through (L-1) are assigned to the names of state verification means 1902 and the parameters 1903.

At step S2107, the state verification means reading means 1803 sets the loop counter E to 0.

At step S2108, the state verification means reading means 1803 obtains the E-th state verification means name 1902 from the names of state verification means 1902 numbered at step S2106. Further, the E-th parameter 1903 corresponding to the name of state verification means 1902 is also obtained.

At step S2109, the state verification means reading means 1803 searches for the state verification means 1805 corresponding to the name of state verification means 1902 obtained at step S2108 from the readable classes in the Java (registered trademark) Runtime Environment 502 and reads it. At this time, the parameter 1903 obtained at step S2108 is set to the state verification means 1805 read.

At step S2110, the state verification means reading means 1803 judges if the state verification means 1805 is successfully read at step S2109 or not. If reading is successfully done, the operation moves to step S2111. If reading is failed, the operation moves to step S2114, and the operation is finished as "operation failed".

At step S2111, the state verification means reading means 1803 increments the loop counter E by 1.

At step S2112, the state verification means reading means 1803 compares the loop counter E with the number L of the names of state verification means 1902. If E<L, there remains the state verification means 1805 which has not been read, so that the operation returns to step S2108. If E≧L, it means all of the state verification means 1805 have been read, the operation moves to step S2113, at which the set of the state verification means 1805 is returned, and the operation is finished.

Through the above flow, the set of the state verification means 1805 for verifying if the state of the in-vehicle PC 111 or the vehicle system 101 is in state which makes the granted access permission valid based on the valid state 605 which makes the granted access permission valid is read.

The operation flow for verifying the in-vehicle PC 111 or the vehicle system 101 is in state which makes the granted access permission valid or not.

First, at step S2201, the state verification means calling means 1801 of the external access control means 508 inputs the set of the state verification means 1805 received as the result of the operation shown in Fig. 21 and the operation is started.

At step S2202, the state verification means calling means 1801 of the external access control means 508 calculates the number L of the state verification means 1805 included in the set of the state verification means 1805 received at step S2201. At the same time, the number of 0 through (L-1) is assigned to each of the state verification means 1805.

At step S2203, the state verification means calling means 1801 of the external access control means 508 sets the value of the loop counter F to 0.

At step S2204, the state verification means calling means 1801 of the external access control means 508 obtains the F-th state verification means 1805 from the state verification means 1805 numbered at step S2202.

At step S2205, the state verification means calling means 1801 of the external access control means 508 calls a state confirmation method of the state verification means 1805 obtained at step S2204 and verifies if the in-vehicle PC 111 or the vehicle system 101 is in the state which makes the granted access permission valid.

Here, the explanation of the operation flow of Fig. 22 is interrupted, and a detail of the operation carried out at step S2205 will be explained by referring to Fig. 23.

The operation of Fig. 23 is an operation flow performed when the state confirmation method is called in the state verification means 1805.

First, at step S2301, the state verification means 1805 starts the operation by a method call from the state verification means calling means 1801 of the external access control means 508.

At step S2302, the state verification means 1805 obtains state information necessary for verifying if it is in the state which makes the granted access permission valid out of the state information of the in-vehicle PC 111 or the vehicle system 101. This state information is obtained by calling the various API provided by Java (registered trademark) 503 or the various in-vehicle API 507 implemented to the Java (registered trademark) Runtime Environment 502.

At step S2303, the state verification means 1805 verifies if the in-vehicle PC 111 or the vehicle system 101 is in the state which makes the granted access permission valid based on the parameters set in the state verification means 1805 at step S2119 and the state information obtained at step S2302 in Fig. 21.

At step S2304, the state verification means 1805 checks if it is in the state which makes the access permission valid or not as a result of the operation at step S2303. If it is in the state which makes the access permission valid, the operation moves to step S2305, and the operation is finished as "valid state". If it is in the state which does not make the access permission valid, the operation moves to step S2306, and the operation is finished as "invalid state".

Next, the operation subsequent to step S2205 of Fig. 22 will be explained again.

At step S2206, the state verification means calling means 1801 of the external access control means 508 checks the result of calling of the state verification means 1805 at step S2205. If the result of operation is "valid state", since it means one condition specified by the valid state 605 is satisfied, the operation moves to step 2207 for carrying out another verification using the state verification means 1805. If it is judged as "invalid state", the operation moves to step S2210, and the operation is finished as "invalid state".

At step S2207, the state verification means calling means 1801 of the external access control means 508 increments the value of the loop counter F by 1.

At step S2208, the state verification means calling means 1801 of the external access control means 508 compares the loop counter F with the number L of the state verification means 1805. If F<L, there remains the state verification means 1805 using which verification has not been done, so that the operation returns to step S2204. If F ≧L, it means the state confirmation operation using all of the state verification means 1805 has been finished, so that the operation moves to step S2209, and the operation is finished with the confirmation result of the valid state as "valid state".

As discussed above, by implementing the state verification means 1805 for verifying if the access permission is in valid state or not independently from the external access control means 508 so as to be able to dynamically read according to need using the state verification means managing means 1802, the external access control means 508 can be implemented independently from the judging operation of the valid state 605. Therefore, it is possible to set a unique valid state 605 according to service requirement of a monitoring company or a service company without modifying the programs of the external access control means 508. For example, when the Java (registered trademark) Runtime Environment 502 previously installed in the in-vehicle PC 111 and the access control system of the present invention allow to set only a condition of "during a vehicle stops", conditions such as "during driving a general road" or "during a door locks", etc. can be newly added by the service company or a user without modifying the software of the in-vehicle PC 111.

Here, the present embodiment has shown a form provided with the external access control means registration means 512 in order to execute the external access control means 508 at the time of access permission authorization. However, in case that the source of the access control controller provided by Java (registered trademark) 504 can be modified, it is also possible to additionally write the operation of calling the access permission list maintaining means 511 directly to the source of the access control controller provided by Java (registered trademark) 504. Modification of the functional configuration or the operation flow is the same as the one shown in the first embodiment, and the explanation is omitted here.

Further, the present embodiment has shown a method for implementing the external access control means registration means 512 so as to satisfy the specification of the policy provider class and registering the external access control means 508 with the access control controller provided by Java (registered trademark) 504. However, the implementation form of the external access control means registration means 512 is not limited to the policy provider class, but can be provided as another implementation form such as a security manager, etc.

Further, the present embodiment has shown an optimal embodiment in the Java (registered trademark) Runtime Environment 502 by assuming that the Java (registered trademark) Runtime Environment 502 is used as the execution environment of the application program. However, the application of the present invention is not limited to the Java (registered trademark) Runtime Environment 502, but can be applied also to another application execution environment such as Windows (registered trademark), MacOS (registered trademark), Linux (registered trademark), Symbian (registered trademark), etc.

Further, the present embodiment has explained a case in which the external access permission management table used for the access control by the external access control means 508 is incorporated to the access permission management table 506 provided by the Java (registered trademark) Runtime Environment 502. However, the external access permission management table used by the external access control means 508 is not limited to being in the same file with the access permission management table 506 provided by the Java (registered trademark) Runtime Environment 502, but can be maintained as a separate file and managed.

Further the present embodiment has explained that the application of the access control of the invention is the in-vehicle PC 111; however, the application is not limited to the in-vehicle PC 111, but can be applied also to equipments connected to various devices by wire or wirelessly such as a home server, a mobile phone, etc.

Further, at step S2002 of the operation flow shown in Fig. 20, all of the granted access permissions are obtained regardless whether the valid state 605 is specified in the access permission management table 506 or not, and the operation of steps S2003 through S2012 is done. This can be done by dividing into two steps: first the granted access permission for which the valid state 605 is not set is obtained and verified; and then the granted access permission for which the valid state 605 is set is obtained and verified.

Further, the present embodiment has shown a system in which the information related to the state verification means 1805 is stored in the state verification means management table 1804 by making the name of valid state 1901 correspondent. However, the information related to the state verification means 1805 can be written directly in the valid state 605 of the access permission management table 506.

Further, the present embodiment has shown a case in which the reading operation of the state verification means management table 1804 is done at the time of using the state verification means reading means 1803 for the first time as shown in Fig. 21. However, this operation can be done at any time as long as it is before the state verification means reading means 1803 is used for the first time; for example, it can be done when the Java (registered trademark) Runtime Environment 502 is started.

Further, the present embodiment has shown a case in which the state verification means calling means 1801 reads the state verification means 1805 using the state verification means reading means 1803; however, if the state verification means 1805 is already known, the state verification means 1805 can be obtained without using the state verification means reading means 1803.

### Embodiment 3.

The foregoing embodiment has explained a case in which the access control is done according to the state of the in-vehicle PC 111 or the vehicle system 101; the present embodiment will explain a case in which the access control is done according to how many times or how many seconds of interval the access permission is tried to be used.

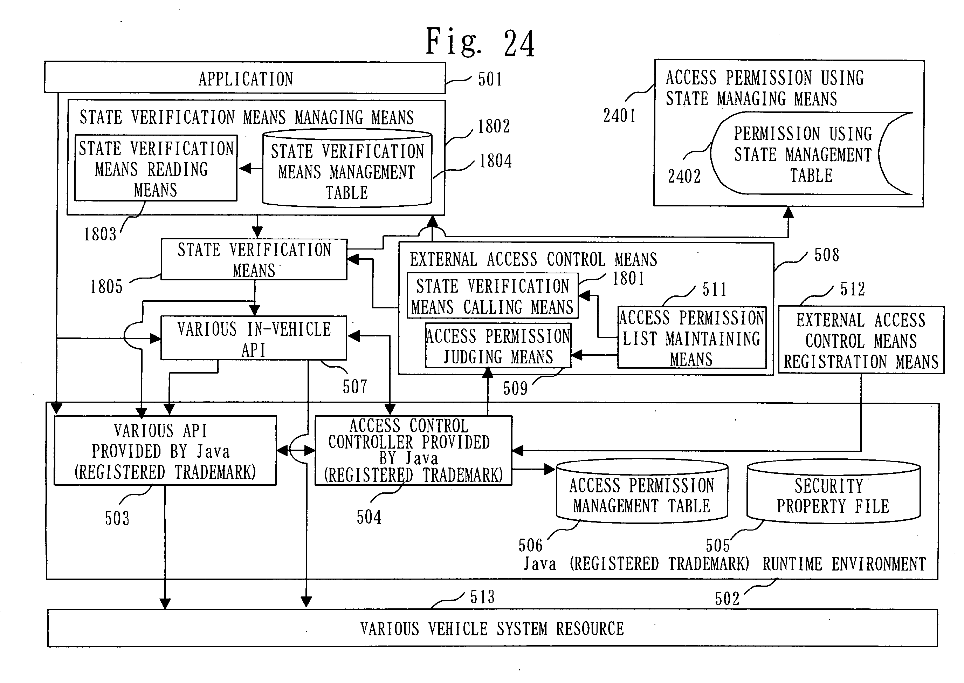

The third embodiment will explain a case in which the access permission is used when the various API provided by Java (registered trademark) 503 or the various in-vehicle API 507 is executed and the access control is done according to the number of uses or the interval of uses. Fig. 24 is an explanatory drawing showing a configuration of the Java (registered trademark) Runtime Environment 502 according to the third embodiment.

The application 501, the Java (registered trademark) Runtime Environment 502, the various API provided by Java (registered trademark) 503, the access control controller provided by Java (registered trademark) 504, the security property file 505, the access permission management table 506, the various in-vehicle API 507, the external access control means 508, the access permission judging means 509, the access permission list maintaining means 511, the external access control means registration means 512, the various vehicle system resources 513, the state verification means calling means 1801, the state verification means managing means 1802, the state verification means reading means 1803, the state verification means management table 1804, and the state verification means 1805 are the same as ones shown in the first and second embodiments and the explanation is omitted.

An access permission using state managing means 2401 is means to store the granted access permission used for calling the various API provided by Java (registered trademark) 503 or the various in-vehicle API 507. A permission using state management table 2402 is provided inside as a table for storing.

The permission using state management table 2402 is a table to store information related to the granted access permission used for calling the various API provided by Java (registered trademark) 503 or the various in-vehicle API 507 such as the last time used, the number of times that has been used, etc.

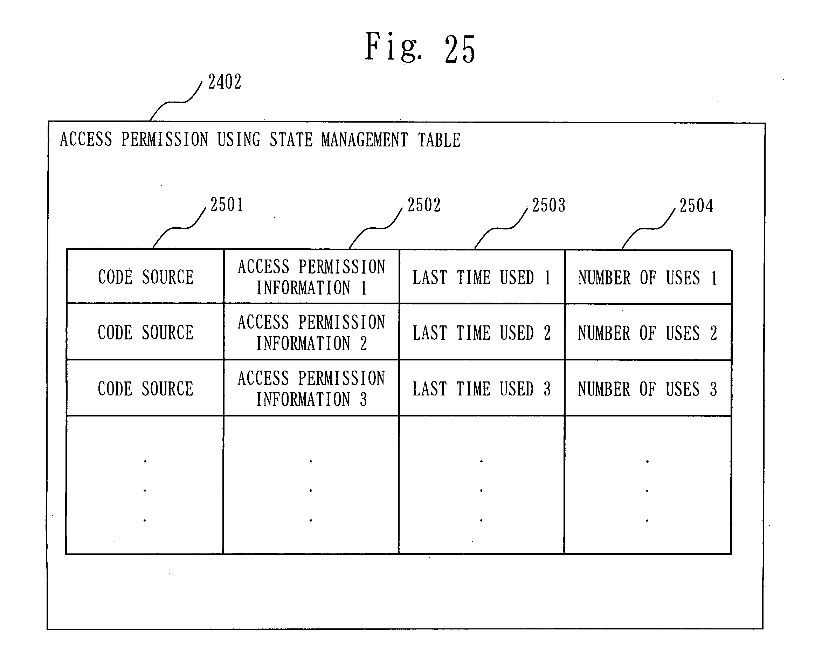

Next, the configuration of the permission using state management table 2402 will be explained by referring to Fig. 25.

A code source 2501 is an entry to store information related to a Java (registered trademark) program which uses the granted access permission. It stores code source which is an attribute of the Java (registered trademark) program generated at step S902 of Fig. 9 in the first embodiment and being executed.

Access permission information 2502 is an entry to store information related to the granted access permission used by the Java (registered trademark) program expressed by the code source 2501. It stores the granted access permission information 602 stored in the access permission management table 506 shown in Fig. 6 of the first embodiment.

A last time used 2503 is an entry to manage the time when the Java (registered trademark) program expressed by the code source 2501 has last used the granted access permission expressed by the access permission information 2502.

The number of uses is an entry to manage how many times the Java (registered trademark) program expressed by the code source 2501 has used the granted access permission expressed by the access permission information 2502.

In the following, a flow of the access control according to the present embodiment will be explained.

First, an operation of registering the external access control means 508 with the Java (registered trademark) Runtime Environment 502 by the access control method of the invention when the Java (registered trademark) Runtime Environment 502 is started is the same as one of Figs. 8 and 9 shown in the first embodiment, so that the explanation is omitted. However, at step S907, the operation is different in that the code source is also supplied in addition to the list of the granted access permissions as a parameter in order to generate the access permission list maintaining means 511.

Next, among the operations of conducting the access control according to the state of the vehicle when the application 501 operated in the Java (registered trademark) Runtime Environment 502 calls the various API provided by Java (registered trademark) 503 or the various in-vehicle API 507, the operation from the application 501 to the access control controller provided by Java (registered trademark) 504 is the same as the operation flow of Fig. 10 shown in the first embodiment, so that the explanation is omitted.

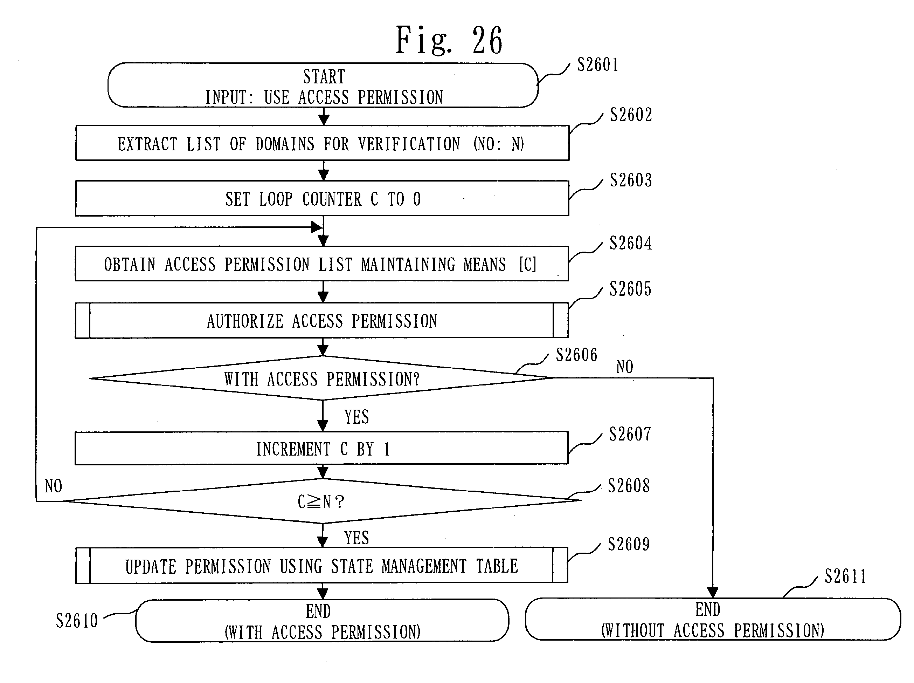

The operation flow shown in Fig. 26 is an operation by the access control controller provided by Java (registered trademark) 504. Since the operation after this operation flow is modified a little from the operation flow of Fig. 11 shown in the first embodiment, the explanation will be done mainly about the difference.

First, when the operation of step S1004 of Fig. 10 is started, step S2601 of Fig. 26 is called.

Since the operation from step S2601 through step S2608 is the same as the one of steps S1101 1 through S1108 of Fig. 11, the explanation is omitted. However, the operation of Fig. 20 is called inside of step S2605 and the operation of Fig. 22 is called inside of step S2009 of Fig. 20, and if the state verification means 1805 is a class for confirming the number of uses or the interval of the granted access permission at step S2205 of Fig. 22, it is different in that the granted access permission and the code source are supplied to the state verification means 1805 as parameters.

At step S2609, the access control controller provided by Java (registered trademark) 504 requests the access permission using state managing means 2401 to update the permission using state management table 2402 for all the domains operated at step S2605.

At step S2610, the access control controller provided by Java (registered trademark) 504 finishes the operation as "with access permission" as a result of the access permission authorization operation.

By the above, the access permission authorization operation is completed by the access control controller provided by Java (registered trademark) 504.

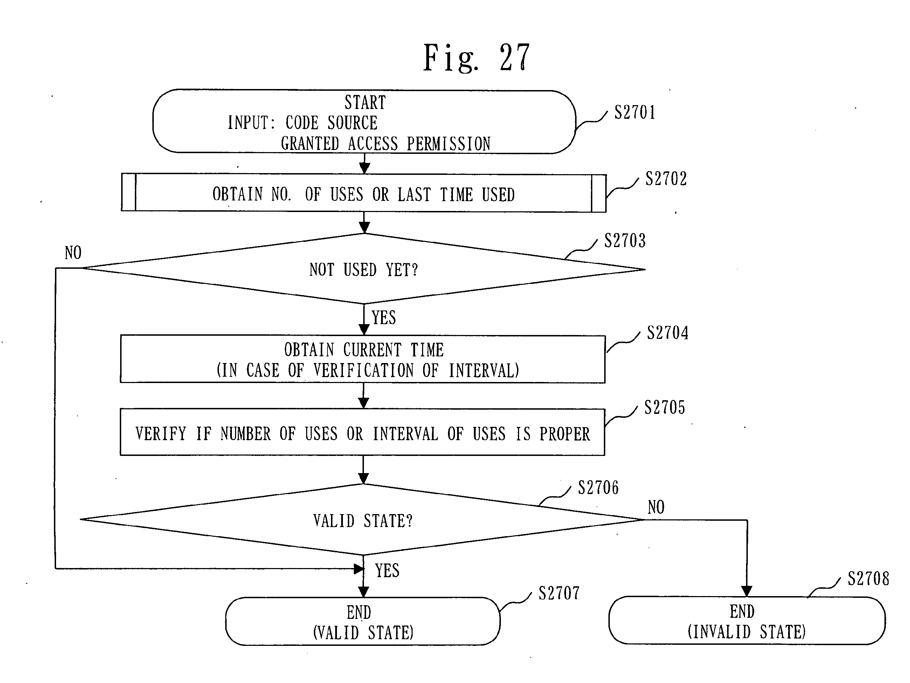

Next, Fig. 27 is an operation flow when the state verification means 1805 for verifying if it is in the valid state or not verifies the number of uses or the interval of uses of the granted access permission.

First, at step S2701, the state verification means 1805 starts confirmation operation of the valid state in response to a request from the state verification means calling means 1801 of the external access control means 508. At this time, the code source and the granted access permission are received as inputs.

At step S2702, the state verification means 1805 requests the access permission using state managing means 2401 to obtain the last time used 2503 or the number of uses 2504 of the granted access permission.

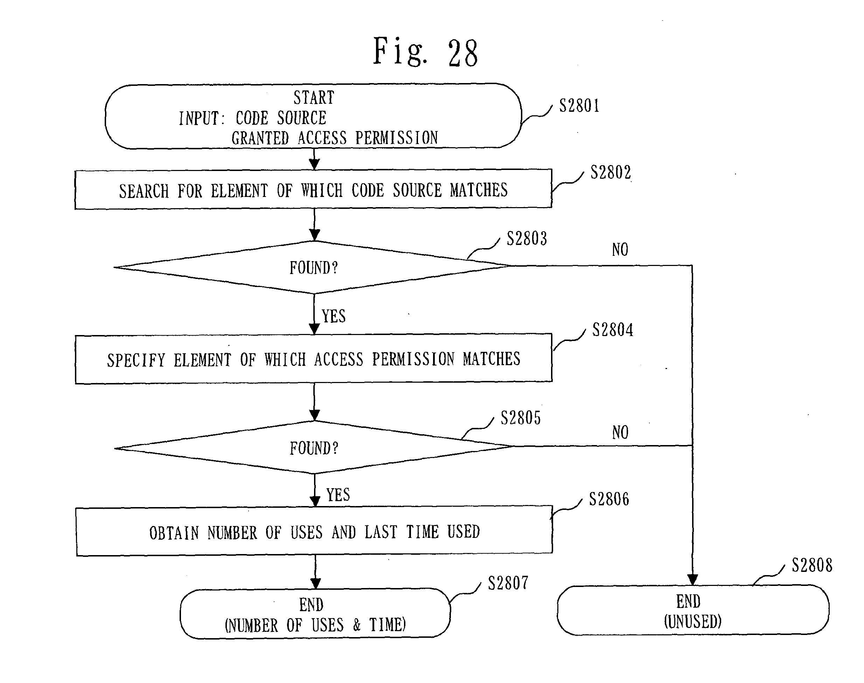

Here, the explanation of the operation flow of Fig. 27 is interrupted, and a detail of the operation carried out at step S2502 will be explained using Fig. 28.

The operation shown in Fig. 28 is an operation flow at the time of obtaining the last time used 2503 or the number of uses 2504 of the granted access permission by the access permission using state managing means 2401.

First, at step S2801, the access permission using state managing means 2401 receives a pair of the code source and the granted access permission as an input from the state verification means 1805 and starts the operation.

At step S2802, the access permission using state managing means 2401 searches for a line element of which the code source 2501 matches out of the permission using state management table 2402.

At step S2803, the access permission using state managing means 2401 judges if the line element of which the code source matches is found or not as a result of the operation at step S2802. As a result of the judgment, if it is found, the operation moves to step S2804. If it is not found, the operation moves to S2808, and the operation is finished as "unused".

At step S2804, the access permission using state managing means 2401 searches for a line element of which the access permission information 2502 of the line element matches the granted access permission information 602 of the granted access permission out of the line element of which the code source 2501 matches searched at step S2802.

At step S2805, as a result of the operation of step S2804, the access permission using state managing means 2401 judges if the line element of which the code source 2501 and the access permission information 2502 match is found or not. As a result of the judgment, if it is found, the operation moves to step S2806. If it is not found, the operation moves to S2808, and the operation is finished as "unused".

At step S2806, the access permission using state managing means 2401 obtains the last time used 2503 and the number of uses 2504 of the granted access permission from the line element searched at step S2805.

At step S2807, the access permission using state managing means 2401 outputs the last time used 2503 and the number of uses 2504 obtained at step S2806 and finishes the operation.

Next, the subsequent operation to step S2702 of Fig. 27 will explained again.

At step S2703, the state verification means 1805 verifies if the "unused" is returned or not as a result of step S2702. If "unused", the operation moves to step S2707, and the operation is finished as "valid state". If it is not "unused", the operation moves to step S2704.

At step S2704, the state verification means 1805 obtains the current time. Here, in case of the state verification means 1805 which does not verify the interval of uses of the granted access permission, this step can be omitted.

At step S2705, the state verification means 1805 verifies if the granted access permission satisfies conditions which makes the granted access permission valid or not from the last time used 2503 and the number of uses 2504 of the granted access permission obtained at step S2702, the current time obtained at step S2704, and the parameters received at the time of generating the state verification means 1805.

At step S2706, the operation of the state verification means 1805 moves to step S2706 if the granted access permission satisfies the conditions for validness as a result of the verification at step S2705, and the operation is finished as "valid state". If the granted access permission does not satisfy the conditions for validness, the operation moves to step S2707, and the operation is finished as "invalid state".

By the above operation shown in Figs. 27 and 28, it is possible to confirm if it is in the valid state or not by the state verification means 1805 when conditions such as the number of uses or the interval of uses of the granted access permission are specified as the valid state which makes the granted access permission valid.

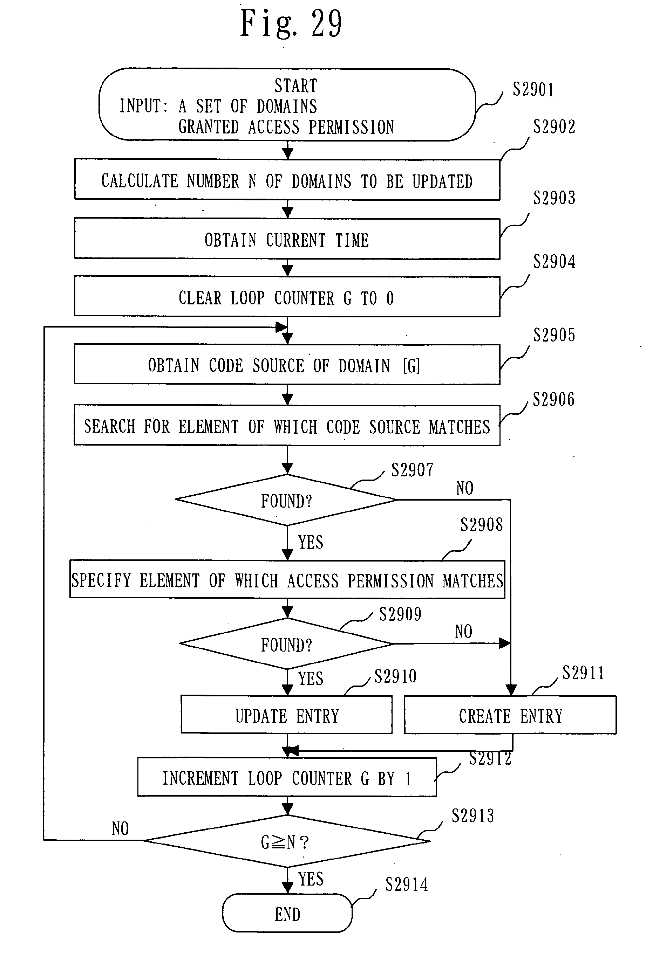

Next, Fig. 29 show an operation to store a history of using a certain granted access permission in the permission using state management table 2402 when the granted access permission is judged as valid. This is a detail of the operation at step S2609 of Fig. 26.

First, at step S2901, the access permission using state managing means 2401 starts the operation by receiving a set of domains and the granted access permission as inputs from step S2609 in Fig. 26.

At step S2902, the access permission using state managing means 2401 calculates the number N of the domains received at step S2901. Then numbers of 0 to (N-1) are assigned to the domains. The subsequent operation is an operation to record the history of using the granted access permission assigned to the domain.

At step S2903, the access permission using state managing means 2401 obtains the current time.

At step S2904, the access permission using state managing means 2401 initializes the loop counter G to 0.

At step S2905, the access permission using state managing means 2401 extracts the G-th domain out of the domains to which the numbers have been assigned at step S2902 and obtains the code source of the domain.

At step S2906, the access permission using state managing means 2401 searches for a line element of which the code source 2501 matches from the permission using state management table 2402.

At step S2907, the access permission using state managing means 2401 judges if the line element of which the code source 2501 matches is found or not as a result of the operation at step S2906. As a result of the judgment, if it is found, the operation moves to step S2908. If not found, the operation moves to S2911.

At step S2908, the access permission using state managing means 2401 searches for a line element of which the access permission information 2502 matches the granted access permission out of the line elements of which the code source 2501 matches searched at step S2906.

At step S2909, the access permission using state managing means 2401 judges if the line element of which the code source 2501 and the access permission information 2502 match is found or not as a result of the operation at step S2908. As a result of judgment, if it is found, the operation moves to step S2910. If not found, the operation moves to S2911.

At step S2910, the access permission using state managing means 2401 increments an element of the number of uses 2504 for the line element found at step S2908 by 1. Further, the current time obtained at step S2903 is stored in the last time used 2503, and the operation moves to step S2912.

At step S2911, the access permission using state managing means 2401 sets the code source obtained at step S2906, the access permission information of the granted access permission received at step S2901, 1 as the number of uses, and the current time obtained at step S2903 as the last time used, and adds a line element for the permission using state management table 2402. Then the operation moves to step S2912.

At step S2912, the access permission using state managing means 2401 increments the loop counter G by 1.

At step S2913, the access permission using state managing means 2401 compares the loop counter G with the number N of the domains calculated at step S2902. If G<N, there remains unupdated line element in the access permission using state managing means 2401, so that the operation returns to step S2905. If G≧N, since it means the update of all the line elements is finished, the operation moves to step S2914, and the operation is finished.

By the above, when the granted access permission is used, a history of the use can be stored in the permission using state management table 2202.

As discussed, just before the granted access permission is used, the operation to store the history of using the granted access permission in the permission using state management table 2402 of the access permission using state managing means 2401 is called from the access control controller provided by Java (registered trademark) 504. Then, at the time of verification of the granted access permission, by verifying the number of uses of the permission or the interval based on the information stored in the permission using state management table 2402, it is possible to use the access permission which is made valid according to the number of uses or the interval of uses of the granted access permission.

Here, the present embodiment has shown a form in which the external access control means registration means 512 is provided to execute the external access control means 508 at the time of the access permission authorization. However, if the source of the access control controller provided by Java (registered trademark) 504 can be modified, the operation to call the access permission list maintaining means 511 can be added directly to the source of the access control controller provided by Java (registered trademark) 504. Since modification of the function configuration or the operation flow is the same as one shown in the first embodiment, it is omitted here.

Further, the present embodiment has shown a method for implementing the external access control means registration means 512 so as to satisfy the specification of the policy provider class and registering the external access control means 508 with the access control controller provided by Java (registered trademark) 504. However, the implementation form of the external access control means registration means 512 is not limited to the policy provider class, but can be provided as another implementation form such as a security manager, etc.

Further, the present embodiment has shown an optimal embodiment in the Java (registered trademark) Runtime Environment 502 by assuming that the Java (registered trademark) Runtime Environment 502 is used as the execution environment of the application program. However, the application of the present invention is not limited to the Java (registered trademark) Runtime Environment 502, but can be applied also to another application execution environment such as Windows (registered trademark), MacOS (registered trademark), Linux (registered trademark), Symbian (registered trademark), etc.

Further, the present embodiment has explained a case in which the external access permission management table used for the access control by the external access control means 508 is incorporated to the access permission management table 506 provided by the Java (registered trademark) Runtime Environment 502. However, the external access permission management table used by the external access control means 508 is not limited to being in the same file as the access permission management table 506 provided by the Java (registered trademark) Runtime Environment 502, but can be maintained as a separate file and managed.

Further the present embodiment has explained that the application of the access control of the invention is the in-vehicle PC 111; however, the application is not limited to the in-vehicle PC 111, but can be applied also to equipments connected to various devices by wire or wirelessly such as a home server, a mobile phone, etc.

Further, in step S2002 of the operation flow shown in Fig. 20, all of the granted access permissions are obtained regardless whether the valid state 605 is specified in the access permission management table 506 or not, and the operation of steps S2003 through S2012 is done. This can be done by dividing into two steps: first the granted access permission for which the valid state 605 is not set is obtained and verified; and then the granted access permission for which the valid state 605 is set is obtained and verified.

Further, the present embodiment has shown a system in which the information related to the state verification means 1805 is stored in the state verification means management table 1804 by making correspondent with the name of valid state 1901. However, the information related to the state verification means 1805 can be written directly in the valid state 605 of the access permission management table 506.

Further, the present embodiment has shown a case in which the reading operation of the state verification means management table 1804 is done at the time of using the state verification means managing means 1803 for the first time as shown in Fig. 21. However, this operation can be done at any time as long as it is before the state verification means managing means 1803 is used for the first time; for example, it can be done when the Java (registered trademark) Runtime Environment 502 is started.

Further, the present embodiment has shown a case in which the state verification means calling means 1801 reads the state verification means 1805 using the state verification means reading means 1803; however, if the state verification means 1805 is already known, the state verification means 1805 can be obtained without using the state verification means reading means 1803.

Further, in the present embodiment, in order to create the access permission list maintaining means 511 at step S907 of Fig. 9, the code source is supplied as a parameter in addition to the list of the granted access permissions. However, since the code source set here is actually used by the state verification means for verifying the number of uses or the interval of uses of the use access permission shown in Fig. 27, it is possible to notify at any another timing as long as the code source is sent to the state verification means.

Further, in the present embodiment, only access permission information of the granted access permission is stored, and when the granted access permission having the same access permission information is used again, it is checked if the granted access permission is in the state which makes the granted access permission valid or not based on the last time used 2503 and the number of uses 2504. However, the information stored in the permission using state management table 2402 is not limited to the access permission information of the granted access permission, but the resource specifying information and the operation specifying information are stored inclusively, and it is possible to judge if the granted access permission is valid or not also using such information.

Further, the present embodiment has shown the operation flow of a case in which the granted access permission to be written in the permission using state management table 2402 is one as shown in Fig. 29. However, another case can be considered in which multiple granted access permissions exist in the same domain, for which a use history must be recorded, for the use access permission to be used. In this case, it is necessary to repeatedly execute the operation shown in Fig. 29 for all of the granted access permissions, for which the use history must be recorded.

### Industrial Applicability

The present invention can be applied to a computer conducting access control.

## Claims

1. A computer comprising:
valid state judging means judging a valid state of an access permission based on a state of an execution environment;
an access permission management table specifying the access permission to computer resource based on the valid state by the valid state judging means; and
an access control execution environment conducting access control based on the access permission management table.

2. The computer of claim 1, further comprising:
external access control means having the valid state judging means and verifying the access permission including the valid state; and
external access control means registration means registering the external access control means so as to be internally called when the access control execution environment authorizes the access permission using the access permission management table.

3. The computer of claim 1, further comprising:
state verification means verifying if the access permission is in the valid state or not,
wherein the valid state judging means dynamically changes a condition for the valid state based on verification result by the state verification means.

4. The computer of claim 1, further comprising:
access permission using state managing means storing a history of using the access permission,
wherein the valid state judging means judges the valid state based on access permission using state by the access permission using state managing means.

5. The computer of claim 1, wherein a Java (registered trademark) Runtime Environment is used as the access control execution environment.

6. A method for controlling access to computer resource comprising:
judging a valid state of an access permission based on a state of an execution environment;
specifying the access permission to computer resource based on the valid state judged;and
conducting access control based on the access permission specified.

7. An access control program for controlling a computer to conduct access control, the program having the computer execute the processes of:
judging a valid state of an access permission based on a state of an execution environment;
specifying the access permission to computer resource based on the valid state judged;and
conducting access control based on the access permission specified.
